# EUROPEAN PATENT SPECIFICATION

(11) **EP 4 405 446 B1**
(45) Date of publication and mention of the grant of the patent: **20.05.2026**
(21) Application number: 22873447.1
(22) Date of filing: 16.09.2022
(51) Int. Cl.: C10G 1/10, C10J 3/60, C08J 11/10, B29B 17/04, C10G 9/00, B29B 17/02, B01D 53/14, B29B 17/00, C08J 11/12, C10B 47/00, C10B 53/07, C10K 1/04, C10K 1/00

(54) **REDUCING THE CARBON FOOTPRINT OF CHEMICAL RECYCLING FACILITIES**
VERRINGERUNG DES KOHLENSTOFFFUSSABDRUCKS CHEMISCHER RECYCLINGANLAGEN
RÉDUCTION DE L'EMPREINTE CARBONE D'INSTALLATIONS DE RECYCLAGE CHIMIQUE

(30) Priority: 21.09.2021 US 202163261419 P
(43) Date of publication of application: 31.07.2024
(73) Proprietor: ExxonMobil Product Solutions Company, Spring, Texas 77389 (US)
(72) Inventor: ANDERSON, Avery, L., Longview, TX 75605 (US); BITTING, Daryl, Longview, TX 75604 (US); POLASEK, Michael, Gary, Longview, TX 75605 (US); SLIVENSKY, David, Eugene, Cherokee Tatum, TX 75691 (US); WU, Xianchun, Longview, TX 75605 (US)
(74) Representative: Wallinger Ricker Schlotter Tostmann
(86) International application number: PCT/US2022/043751
(87) International publication number: WO 2023/049034

(56) References cited:
- WO-A1-2010/051013
- WO-A1-2021/087066
- WO-A1-2021/163113
- CA-A1- 3 174 898
- JP-A- 2000 176 403
- US-A1- 2016 264 885

## Description

### BACKGROUND

Waste plastic pyrolysis plays a part in a variety of chemical recycling technologies. The pyrolysis of waste plastic produces heavy components (e.g., waxes, tar, and char) as well as recycled content pyrolysis oil (r-pyoil) and recycled content pyrolysis gas (r-pygas). When the pyrolysis facility is located near another processing facility, such as a cracker facility, it is desirable to send as much of the r-pyoil and r-pygas as possible to the downstream processing facility to be used as a feedstock in forming other recycled content products (e.g., olefins, paraffins, etc.).

However, when pyrolysis facilities are added to existing downstream facilities, such as a cracking facility, the carbon footprint of the resulting combined facilities is not typically optimized as the primary focus is on the production of specific recycle content products. Consequently, even though recycle content products are being produced by these combined facilities, the environmental impact of the combined facilities may not be thoroughly analyzed so as to avoid releasing more carbon dioxide into the environment than is necessary. Therefore, such combined facilities may exhibit one or more process deficiencies that negatively impact the resulting global warming potential of the combined facilities. Thus, processing schemes for waste plastic pyrolysis that provide a lower carbon footprint are needed.

CA 3 174 898 discloses an olefin production process.

### SUMMARY

The invention is defined in the appended claims.

### BRIEF DESCRIPTION OF THE DRAWINGS

FIG. 1 is a block flow diagram illustrating the main steps of a process and facility for chemically recycling waste plastic and lowering the global warming potential of the facility;
FIG. 2 is a block flow diagram illustrating the main steps of a process and facility for chemically recycling waste plastic and reutilizing heat from the pyrolysis effluent via a heat transfer medium; and
FIG. 3 is a block flow diagram illustrating the main steps of a process for recovering a recovered CO₂ stream from a pyrolysis gas or a pyrolysis flue gas via an absorber-stripper system.

### DETAILED DESCRIPTION

To optimize the carbon footprint of the chemical recycling facility described herein, we have discovered numerous ways for reducing the carbon footprint of the facility, including: (i) recycling at least a portion of the residual heat energy from the pyrolysis effluent back upstream to the pyrolysis process and waste plastic liquification stage; (ii) recovering at least a portion of the carbon dioxide from at least a portion of the pyrolysis flue gas and/or the pyrolysis gas; (iii) feeding at least a portion of the pyrolysis gas at a cracker facility at a position downstream of a cracker furnace; (iv) using at least a portion of a demethanizer overhead stream as a fuel in a pyrolysis facility and/or a cracking facility; and (v) providing a chemical recycling facility that contains a pyrolysis facility co-located with a cracking facility. Consequently, by utilizing the above methods and configurations, we can lower the carbon footprint and global warming potential of the combined facilities described herein.

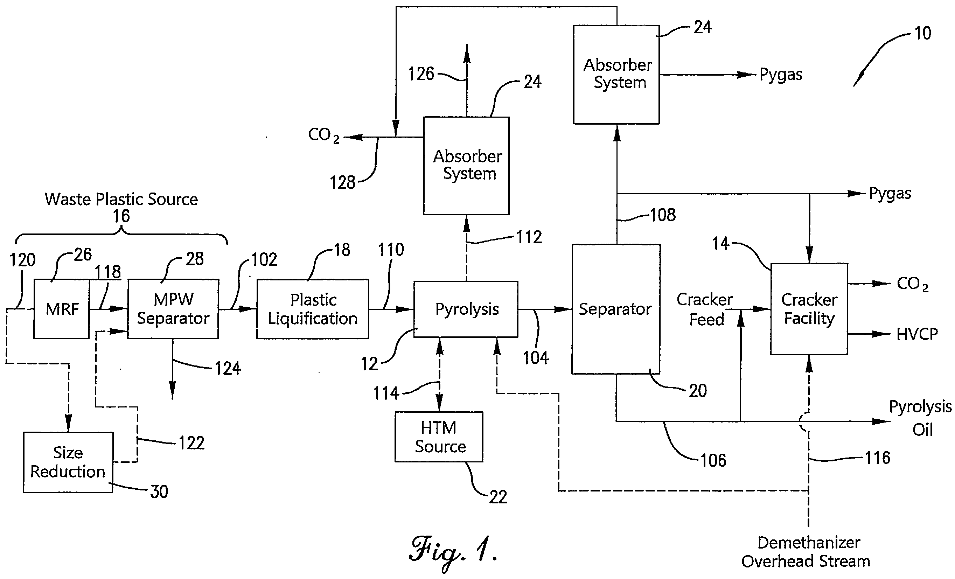

FIG. 1 depicts an exemplary chemical recycling facility 10 comprising: (i) a pyrolysis reactor 12, (ii) a cracking facility 14, (iii) a waste plastic source 16 for providing a waste plastic stream 102, (iv) a plastic liquification zone 18, (v) a separation zone 20 for separating the pyrolysis effluent stream 104 into a pyrolysis oil stream 106 and a pyrolysis gas stream 108, (vi) a heat transfer medium (HTM) source 22 for providing a heat transfer medium via HTM loop 114, and (vii) at least one absorber system 24 for recovering at least a portion of the carbon dioxide from the pyrolysis flue gas stream 112 and/or the pyrolysis gas stream 108. Furthermore, as shown in FIG. 1, the waste plastic source 16 may comprise a municipal recycling facility (MRF) 26, a mixed waste plastic (MPW) separator 28, and an optional plastic size reduction zone 30.

As depicted in FIG. 1, the chemical recycling facility 10 may utilize one or more process steps and/or configurations for reducing the carbon footprint. For example, the chemical recycling facility 10 may: (i) recycle at least a portion of the residual heat energy from the pyrolysis effluent stream 104 back upstream to the pyrolysis process and waste plastic liquification stage 18 via the HTM loop 114; (ii) recover at least a portion of the carbon dioxide from at least a portion of the pyrolysis gas stream 108 and/or the pyrolysis flue gas 112; (iii) feed at least a portion of the pyrolysis gas stream 108 at a cracker facility at a position downstream of a cracker furnace; (iv) use at least a portion of a demethanizer overhead stream 116 as a fuel in the pyrolysis reactor 12 and/or a cracking facility 14; and/or (v) provide a pyrolysis facility that is co-located with a cracking facility 14.

As used herein, the "carbon footprint" refers to the amount of carbon dioxide and other carbon compounds emitted due to the consumption of fossil fuels within the facility. As discussed below in greater detail, the carbon footprint of the chemical recycling facility may be measured based on a life cycle assessment (LCA) and provided as a Global Warming Potential (GWP).

It should be understood that FIG. 1 depicts one exemplary embodiment of the present technology. Certain features depicted in FIG. 1 may be omitted and/or additional features described elsewhere herein may be added to the system depicted in FIG. 1. The various process steps, along with the relevant methods for reducing the carbon footprint of the chemical recycling facility 10, are described below in greater detail.

### Overall Chemical Recycling Facility

Turning now to FIG. 1, the main steps of a process for chemically recycling waste plastic in a chemical recycling facility 10 are shown. Chemical recycling processes and facilities as described herein may be used to convert waste plastic to recycle content products or chemical intermediates used to form a variety of end use materials. The waste plastic fed to the chemical recycling facility/process can be mixed plastic waste (MPW), presorted waste plastic, and/or pre-processed waste plastic.

In an embodiment or in combination with any embodiment mentioned herein, the chemical recycling facility 10 may be a commercial-scale facility capable of processing significant volumes of mixed plastic waste. As used herein, the term "commercial scale facility" refers to a facility having an average annual feed rate of at least 500 pounds per hour, averaged over one year.

In an embodiment or in combination with any embodiment mentioned herein, two or more of the facilities shown in FIG. 1, such as the preprocessing facility (e.g., the MRF 26, the MPW separator 28, and/or the size reduction zone 30), the pyrolysis facility (e.g., the pyrolysis reactor 12, the plastic liquification zone 18, the separation zone 20, the HTM source 22, and/or the absorber system 24), and the cracking facility 14 may be co-located with one another. As used herein, the term "co-located" refers to facilities in which at least a portion of the process streams and/or supporting equipment or services are shared between the two facilities. When two or more of the facilities shown in FIG. 1 are co-located, the facilities may meet at least one of the following criteria (i) through (v): (i) the facilities share at least one non-residential utility service; (ii) the facilities share at least one service group; (iii) the facilities are owned and/or operated by parties that share at least one property boundary; (iv) the facilities are connected by at least one conduit configured to carry at least one process material (e.g., solid, liquid and/or gas fed to, used by, or generated in a facility) from one facility to another; and (v) the facilities are within 40, within 35, within 30, within 20, within 15, within 12, within 10, within 8, within 5, within 2, or within 1 mile of one another, measured from their geographical center. At least one, at least two, at least three, at least four, or all of the above statements (i) through (v) may be true. Note that 1 mile is 1609 meters.

Regarding (i), examples of suitable utility services include, but are not limited to, steam systems (co-generation and distribution systems), cooling water systems, heat transfer fluid systems, plant or instrument air systems, nitrogen systems, hydrogen systems, non-residential electrical generation and distribution, including distribution above 8000V, non-residential wastewater/sewer systems, storage facilities, transport lines, flare systems, and combinations thereof.

Regarding (ii), examples of service groups and facilities include, but are not limited to, emergency services personnel (fire and/or medical), a third-party vendor, a state or local government oversight group, and combinations thereof. Government oversight groups can include, for example, regulatory or environmental agencies, as well as municipal and taxation agencies at the city, county, and state level.

Regarding (iii), the boundary may be, for example, a fence line, a property line, a gate, or common boundaries with at least one boundary of a third-party owned land or facility.

Regarding (iv), the conduit may be a fluid conduit that carries a gas, a liquid, a solid/liquid mixture (e.g., slurry), a solid/gas mixture (e.g., pneumatic conveyance), a solid/liquid/gas mixture, or a solid (e.g., belt conveyance). In some cases, two units may share one or more conduits selected from the above list.

### Plastic Preprocessing

Turning again to FIG. 1, a stream 102 of waste plastic, which can be mixed plastic waste (MPW), may be introduced into the chemical recycling facility 10 from the waste plastic source 16. As used herein, the terms "waste plastic" and "plastic waste" refer to used, scrap, and/or discarded plastic materials, such as plastic materials typically sent to a landfill. As shown in FIG. 1, the waste plastic feed stream 102 may be derived from the waste plastic source 16, which may include a waste plastic preprocessing facility. More particularly, this waste plastic preprocessing facility may comprise a municipal recycling facility (MRF) 26, a mixed waste plastic (MPW) separator 28, and an optional plastic size reduction zone 30.

The waste plastic stream 102 fed to the chemical recycling facility 10 may include unprocessed or partially processed waste plastic. As used herein, the term "unprocessed waste plastic" means waste plastic that has not be subjected to any automated or mechanized sorting, washing, or comminuting. Examples of unprocessed waste plastic include waste plastic collected from household curbside plastic recycling bins or shared community plastic recycling containers. Partially processed waste plastics may originate from, for example, municipal recycling facilities (MRFs) or reclaimers. In certain embodiments, the waste plastic may comprise at least one of post-industrial (or pre-consumer) plastic and/or post-consumer plastic.

As shown in FIG. 1, unprocessed, partially processed, and/or processed waste plastic, such as mixed plastic waste (MPW), may first be introduced into the chemical recycling facility 10 via the waste plastic stream 102 from the waste plastic source 16. As noted above, the waste plastic source 16 may include a preprocessing facility that can prepare the waste plastic feedstock for the downstream recycling processes. This waste plastic preprocessing facility may comprise a municipal recycling facility (MRF) 26, a mixed waste plastic (MPW) separator 28, and an optional plastic size reduction zone 30. Although FIG. 1 depicts a MRF facility, this facility may be easily replaced by or combined with a reclaimer facility.

While in the optional preprocessing facility, the waste plastic feedstock may undergo one or more preprocessing steps to prepare it for chemical recycling. As used herein, the term "preprocessing facility" refers to a facility that includes all equipment, lines, and controls necessary to carry out the preprocessing of waste plastic. In the preprocessing facility, the stream may undergo one or more processing steps to prepare it for chemical recycling. As used herein, the term "preprocessing" refers to preparing waste plastic for chemical recycling using one or more of the following steps: (i) comminuting; (ii) particulating; (iii) washing; (iv) drying; and (v) separation.

Preprocessing facilities as described herein may employ any suitable method for carrying out the preparation of waste plastic for chemical recycling using one or more of following steps, which are described in further detail below. The preprocessing facility may also include infrastructure for receiving waste plastic (e.g., MPW) as described herein to facilitate delivery of the waste plastic by any suitable type of vehicle including, for example, trains, trucks, and/or ships. Such infrastructure may include facilities to assist with offloading the waste plastic from the vehicle, as well as storage facilities and one or more conveyance systems for transporting the waste plastic from the offloading zone to the downstream processing zones. Such conveyance systems may include, for example, pneumatic conveyors, belt conveyors, bucket conveyors, vibrating conveyors, screw conveyors, cart-on-track conveyors, tow conveyors, trolley conveyors, front-end loaders, trucks, and chain conveyors.

Alternatively, in certain embodiments, the waste plastic source 16 does not contain a preprocessing facility and the waste plastic stream 102 is not subjected to any preprocessing before any of the downstream chemical recycling steps described herein.

As shown in FIG. 1, all or a portion of the MPW in the waste plastic stream 102 can originate from at least one municipal recycling facility (MRF) 26. In an embodiment or in combination with any embodiment mentioned herein, all or a portion of the MPW in the waste plastic stream 102 can originate from a municipal recycling facility (MRF) 26. The MRF can include any physical recycling facility that may carry out physical recycling and/or mechanical sorting of waste plastics. The waste plastic (e.g., MPW) introduced into the chemical recycling facility 10 may be provided from a variety of sources, including, but not limited to, municipal recycling facilities (MRFs), reclaimer facilities, other mechanical sorting facilities, landfills, waste plastic collection centers, convenience centers, and/or waste plastic warehouses.

In an embodiment or in combination with any embodiment mentioned herein, all or a portion of the MPW in the waste plastic stream 102 can originate from a reclaimer facility. In such embodiments, a reclaimer may be used in place of the MRF 26.

In an embodiment or in combination with any embodiment mentioned herein, the waste plastic stream 118 and/or waste plastic stream 120 from the MRF 26 may each comprise two or more types of waste plastics. Examples of waste plastics that may be present in the waste plastic stream 118 and/or waste plastic stream 120 from the MRF 26 can include, but are not limited to, polyolefins (PO), aromatic and aliphatic polyesters, polyvinyl chloride (PVC), polystyrene, cellulose esters, polytetrafluoroethylene, acrylobutadienestyrene (ABS), cellulosics, epoxides, polyamides, phenolic resins, polyacetal, polycarbonates, polyphenylene-based alloys, poly(methyl methacrylate), styrene-containing polymers, polyurethane, vinyl-based polymers, styrene acrylonitrile, urea-containing polymers, and melamines. For instance, the waste plastic stream 118 and/or waste plastic stream 120 may comprise a mixture of one or more polyolefins, one or more polyesters, PVC, and polystyrene.

Examples of specific polyolefins may include linear low-density polyethylene (LLDPE), low density polyethylene (LDPE), polymethylpentene, polybutene-1, high density polyethylene (HDPE), atactic polypropylene, isotactic polypropylene, syndiotactic polypropylene, crosslinked polyethylene, amorphous polyolefins, and the copolymers of any one of the aforementioned polyolefins.

Examples of polyesters can include those having repeating aromatic or cyclic units such as those containing a repeating terephthalate, isophthalate, or naphthalate units such as PET, modified PET, and PEN, or those containing repeating furanate repeating units. As used herein, "PET" or "polyethylene terephthalate" refers to a homopolymer of polyethylene terephthalate, or to a polyethylene terephthalate modified with one or more acid and/or glycol modifiers and/or containing residues or moieties of other than ethylene glycol and terephthalic acid, such as isophthalic acid, 1,4-cyclohexanedicarboxylic acid, diethylene glycol, 2,2,4,4-tetramethyl-1,3-cyclobutanediol (TMCD), cyclohexanedimethanol (CHDM), propylene glycol, isosorbide, 1,4-butanediol, 1,3-propane diol, and/or neopentyl glycol (NPG).

In an embodiment or in combination with any embodiment mentioned herein, the waste plastic stream 118 and/or waste plastic stream 120 from the MRF 26 comprises at least 20, at least 25, at least 30, at least 35, at least 40, at least 45, at least 50, at least 55, at least 60, at least 65, at least 70, at least 75, at least 80, at least 85, at least 90, at least 95, or at least 99 weight percent of at least two, three, or four types of plastics, based on the total weight of the stream. Alternatively, or in addition, the waste plastic stream 118 and/or waste plastic stream 120 from the MRF 26 may comprise not more than 99.9, not more than 99, not more than 97, not more than 92, not more than 90, not more than 85, not more than 80, not more than 75, not more than 70, not more than 65, not more than 60, not more than 55, not more than 50, not more than 45, not more than 40, not more than 35, not more than 30, not more than 25, not more than 20, not more than 15, not more than 10, or not more than 5 weight percent of at least two, three, or four types of plastic, based on the total weight of the stream.

In an embodiment or in combination with any embodiment mentioned herein, the waste plastic stream 118 and/or waste plastic stream 120 from the MRF 26 comprises at least 20, at least 25, at least 30, at least 35, at least 40, at least 45, at least 50, at least 55, at least 60, at least 65, at least 70, at least 75, at least 80, at least 85, at least 90, at least 95, or at least 99 weight percent of one or more polyolefins, based on the total weight of the stream. Alternatively, or in addition, the waste plastic stream 118 and/or waste plastic stream 120 from the MRF 26 may comprise not more than 99.9, not more than 99, not more than 97, not more than 92, not more than 90, not more than 85, not more than 80, not more than 75, not more than 70, not more than 65, not more than 60, not more than 55, not more than 50, not more than 45, not more than 40, not more than 35, not more than 30, not more than 25, not more than 20, not more than 15, not more than 10, or not more than 5 weight percent of one or more polyolefins, based on the total weight of the stream.

In one embodiment or in combination with any of the mentioned embodiments, the waste plastic stream 118 and/or waste plastic stream 120 from the MRF 26 may comprise not more than 95, not more than 90, not more than 85, not more than 80, not more than 75, not more than 70, not more than 65, not more than 60, not more than 55, not more than 50, not more than 45, not more than 40, not more than 35, not more than 30, not more than 25, not more than 20, not more than 15, not more than 12, not more than 10, not more than 8, not more than 6, not more than 5, not more than 4, not more than 3, not more than 2, or not more than 1 weight percent of polyvinyl chloride (PVC) and/or polyesters, based on the total weight of the stream.

In one embodiment or in combination with any of the mentioned embodiments, the waste plastic stream 118 and/or waste plastic stream 120 from the MRF 26 comprises not more than 20, not more than 15, not more than 12, not more than 10, not more than 8, not more than 6, not more than 5, not more than 4, not more than 3, not more than 2, not more than 1, not more than 0.5, or not more than 0.1 weight percent of biowaste materials, based on the total weight of the stream. As used herein, the term "biowaste" refers to material derived from living organisms or of organic origin. Exemplary biowaste materials include, but are not limited to, cotton, wood, saw dust, food scraps, animals and animal parts, plants and plant parts, and manure.

Turning back to FIG. 1, prior to entering the MPW separator 28, the waste plastic stream 120 can be optionally size reduced in the size reduction zone 30 via chopping, shredding, harrowing, confrication, pulverizing, and/or cutting to make a size-reduced plastic feed stream 122. The plastics can also be densified (e.g., pelletized) prior to entering the MPW separator 28. Examples of processes that densify include extrusion (e.g., into pellets), molding (e.g., into briquettes), and agglomerating (e.g., through externally applied heat, heat generated by frictional forces, or by adding one or more adherents, which can be non-virgin polymers themselves).

The size-reduced stream 122 exiting the size reduction zone 30 can comprise waste plastic particulates. As used herein, the term "waste plastic particulates" refers to waste plastic having a D90 of less than 1 inch. In an embodiment or in combination with any embodiment mentioned herein, the waste plastic particulates can be MPW particulates. A waste plastic or MPW particulate can include, for example, comminuted plastic particles that have been shredded or chopped, or plastic pellets.

In an embodiment or in combination with any embodiment mentioned herein, the plastic stream 120 may be ground, shredded, or otherwise reduced in size while in the size reduction zone 30. The plastic materials can be made into particles having a D90 particle size of less than 1 inch, less than ¾ inch, or less than ½ inch. In one or more other embodiments, the D90 particle size of the plastic materials exiting the granulating equipment is from 1/16 inch to 1 inch, 1/8 inch to 3/4 inch, 1/4 inch to 5/8 inch, or 3/8 inch to 1/2 inch. Note that 1 inch is 2,54 cm.

As noted above, the waste plastic (e.g., MPW) may be provided in bales of unsorted or presorted plastic, or in other large, aggregated forms. In such embodiments, the bales or aggregated plastics may undergo an initial process in which they are broken apart in the size reduction zone 30. Plastic bales can be sent to a debaler machine in the size reduction zone 30 that comprises, for example, one or more rotating shafts equipped with teeth or blades configured to break the bales apart, and in some instances shred, the plastics from which the bales are comprised. In one or more other embodiments, the bales or aggregated plastics can be sent to a guillotine machine where they are chopped into smaller sized pieces of plastic.

Turning again to FIG. 1, the preprocessing facility of the waste plastic source 16 may include at least one MPW separation zone 28. The MPW separation zone 28 may be configured to separate the waste plastic stream into two or more streams enriched in certain types of plastics. Such separation is particularly advantageous when the waste plastic fed to the chemical recycling facility 10 is MWP.

Any suitable type of separation device, system, or facility may be employed to separate the waste plastic into two or more streams enriched in certain types of plastics such as, for example, a PET-enriched stream and a PO-enriched stream. Examples of suitable types of separation include mechanical separation and density separation, which may include sink-float separation and/or centrifugal density separation. As used herein, the term "sink-float separation" refers to a density separation process where the separation of materials is primarily caused by floating or sinking in a selected liquid medium, while the term "centrifugal density separation" refers to a density separation process where the separation of materials is primarily caused by centrifugal forces. In general, the term "density separation process" refers to a process for separating materials based, at least in part, upon the respective densities of the materials into at least a higher-density output and a lower-density output and includes both sink-float separation and centrifugal density separation.

When sink-float separation is used, the liquid medium can comprise water. Salts, saccharides, and/or other additives can be added to the liquid medium, for example to increase the density of the liquid medium and adjust the target separation density of the sink-float separation stage. The liquid medium can comprise a concentrated salt solution. In one or more such embodiments, the salt is sodium chloride. In one or more other embodiments, however, the salt is a non-halogenated salt, such as acetates, carbonates, citrates, nitrates, nitrites, phosphates, and/or sulfates. The liquid medium can comprise a concentrated salt solution comprising sodium bromide, sodium dihydrogen phosphate, sodium hydroxide, sodium iodide, sodium nitrate, sodium thiosulfate, potassium acetate, potassium bromide, potassium carbonate, potassium hydroxide, potassium iodide, calcium chloride, cesium chloride, iron chloride, strontium chloride, zinc chloride, manganese sulfate, magnesium sulfate, zinc sulfate, and/or silver nitrate. In an embodiment or in combination with any embodiment mentioned herein, the salt is a caustic component. The salt may comprise sodium hydroxide, potassium hydroxide, and/or potassium carbonate.

In an embodiment or in combination with any embodiment mentioned herein, the liquid medium can comprise a saccharide, such as sucrose. The liquid medium can comprise carbon tetrachloride, chloroform, dichlorobenzene, dimethyl sulfate, and/or trichloro ethylene. The particular components and concentrations of the liquid medium may be selected depending on the desired target separation density of the separation stage. The centrifugal density separation process may also utilize a liquid medium as described above to improve separation efficiency at the target separation density.

The waste (e.g., MPW) introduced into the MPW separator 28 may be in several forms including, but not limited to, whole articles, particulates (e.g., comminuted, pelletized, fiber plastic particulates), bound bales (e.g., whole articles compressed and strapped), unbound articles (i.e., not in bales or packaged), containers (e.g., box, sack, trailer, railroad car, loader bucket), piles (e.g., on a concrete slab in a building), solid/liquid slurries (e.g., pumped slurry of plastics in water), and/or loose materials conveyed physically (e.g., particulates on a conveyor belt) or pneumatically (e.g., particulates mixed with air and/or inert gas in a convey pipe).

The debaled and/or guillotined plastic solids can then be subjected to a sorting process in which various non-plastic, heavy materials, such as glass, metal, and rocks, are removed. This sorting process can be performed manually or by a machine. Sorting machines may rely upon optical sensors, magnets, eddy currents, pneumatic lifts or conveyors that separate based on drag coefficient, or sieves to identify and remove the heavy materials.

While in the separation zone 28, the plastics may undergo washing and drying. In an embodiment or in combination with any embodiment mentioned herein, the unprocessed or partially processed waste plastic provided to the chemical recycling facility 10 may comprise various organic contaminants or residues that may be associated with the previous use of the waste plastic. For example, the waste plastic may comprise food or beverage soils, especially if the plastic material was used in food or beverage packaging. Accordingly, the waste plastic may also contain microorganism contaminants and/or compounds produced by the microorganisms. Various microorganisms can produce compounds that cause malodors. Exemplary odor-causing compounds include hydrogen sulfide, dimethyl sulfide, methanethiol, putrescine, cadaverine, trimethylamine, ammonia, acetaldehyde, acetic acid, propanoic acid, and/or butyric acid. Thus, it can be appreciated that the waste plastic could present odor nuisance concerns.

In an embodiment or in combination with any embodiment mentioned herein, the separation zone 28 may also include equipment for or the step of treating the waste plastic with a chemical composition that possesses antimicrobial characteristics, thereby forming treated particulate plastic solids. In some embodiments, this may include treating the waste plastic with sodium hydroxide, high pH salt solutions (e.g., potassium carbonate), or other antimicrobial composition.

Additionally, in an embodiment or in combination with any embodiment mentioned herein, the waste plastic (e.g., MPW) may optionally be washed to remove inorganic, non-plastic solids such as dirt, glass, fillers and other non-plastic solid materials, and/or to remove biological components such as bacteria and/or food. The resulting washed waste plastic may also be dried to a moisture content of not more than 5, not more than 3, not more than 2, not more than 1, not more than 0.5, or not more than 0.25 weight percent water (or liquid), based on the total weight of the waste plastic. The drying can be done in any suitable manner, including by the addition of heat and/or air flow, mechanical drying (e.g., centrifugal), or by permitting evaporation of the liquid to occur over a specified time. All these steps may occur within the separation zone 28.

The residual waste and any other undesirable plastics removed in the separation zone 28 may be removed therefrom via waste stream 124. Depending on its composition, the waste stream 124 may be recycled as a process stream at a different location (e.g., the cracking facility 14, a solvolysis facility (not shown), and/or a gasifier facility (not shown)) that is within the facility 10 or outside of it. In certain embodiments, at least a portion of the waste stream may be sent to a facility that is co-located with the waste plastic source 16 and the pyrolysis facility, such as the cracking facility 14 and/or a solvolysis facility. In certain embodiments, the waste stream 124 may be enriched in polyesters (e.g., PET) and, therefore, at least a portion of the waste stream 124 may be sent to a solvolysis facility (not shown). In such embodiments, this polyester-enriched (e.g., PET-enriched) waste stream 124 may be broken down in the solvolysis facility into a principal terephthalate (e.g., dimethyl terephthalate) and a principal glycol (e.g., ethylene glycol). Consequently, in such embodiments, the carbon footprint of the facility 10, as expressed as Global Warming Potential (GWP), may be further lowered.

The separated and purified waste plastic stream 102 from the separation zone 28 may then be fed downstream to the plastic liquification zone 18.

Turning back to FIG. 1, all or a portion of the MPW in the waste plastic stream 102 from the waste plastic source 16 can originate from a municipal recycling facility (MRF) 26.

Alternatively, in an embodiment or in combination with any embodiment mentioned herein, all or a portion of the MPW in the waste plastic stream 102 from the waste plastic source 16 can originate from a reclaimer facility.

In an embodiment or in combination with any embodiment mentioned herein, the waste plastic stream 102 from the waste plastic source 16 comprises at least 20, at least 25, at least 30, at least 35, at least 40, at least 45, at least 50, at least 55, at least 60, at least 65, at least 70, at least 75, at least 80, at least 85, at least 90, at least 95, or at least 99 weight percent of one or more polyolefins, based on the total weight of the stream. Alternatively, or in addition, the waste plastic stream 102 comprises not more than 99.9, not more than 99, not more than 97, not more than 92, not more than 90, not more than 85, not more than 80, not more than 75, not more than 70, not more than 65, not more than 60, not more than 55, not more than 50, not more than 45, not more than 40, not more than 35, not more than 30, not more than 25, not more than 20, not more than 15, not more than 10, or not more than 5 weight percent of one or more polyolefins, based on the total weight of the stream.

In one embodiment or in combination with any of the mentioned embodiments, the waste plastic stream 102 from the waste plastic source 16 comprises not more than 20, not more than 15, not more than 12, not more than 10, not more than 8, not more than 6, not more than 5, not more than 4, not more than 3, not more than 2, or not more than 1 weight percent of polyesters, based on the total weight of the stream.

In one embodiment or in combination with any of the mentioned embodiments, the waste plastic stream 102 from the waste plastic source 16 comprises not more than 20, not more than 15, not more than 12, not more than 10, not more than 8, not more than 6, not more than 5, not more than 4, not more than 3, not more than 2, or not more than 1 weight percent of biowaste materials, based on the total weight of the stream. As used herein, the term "biowaste" refers to material derived from living organisms or of organic origin. Exemplary biowaste materials include, but are not limited to, cotton, wood, saw dust, food scraps, animals and animal parts, plants and plant parts, and manure.

In an embodiment or in combination with any embodiment mentioned herein, the waste plastic stream 102 from the waste plastic source 16 can include not more than 10, not more than 5, not more than 4, not more than 3, not more than 2, not more than 1, not more than 0.75, or not more than 0.5 weight percent of polyvinyl chloride (PVC), based on the total weight of the stream.

Referring again to FIG. 1, the waste plastic stream 102 from the waste plastic source 16 may be introduced into one or more downstream processing facilities (or undergo one or more downstream processing steps) within the chemical recycling facility 10. In an embodiment or in combination with any embodiment mentioned herein, at least a portion of the waste plastic stream 102 may be directly or indirectly introduced into the plastic liquification zone 18. Additional details of each step, as well as the general integration of each of these steps or facilities with one or more of the others according to one or more embodiments of the present technology are discussed in further detail below.

### Liquification/Dehalogenation

As shown in FIG. 1, the waste plastic stream 102 may be introduced into a plastic liquification zone 18 prior to being introduced into one or more of the downstream processing facilities. As used herein, the term "liquification" zone 18 refers to a chemical processing zone or step in which at least a portion of the incoming plastic is liquefied. The step of liquefying plastic can include chemical liquification, physical liquification, or combinations thereof. Exemplary methods of liquefying the plastic introduced in the liquification zone 18 can include: (i) heating/melting; (ii) dissolving in a solvent; (iii) depolymerizing; (iv) plasticizing; and combinations thereof. Additionally, one or more of options (i) through (iv) may also be accompanied by the addition of a blending or liquification agent to help facilitate the liquification (reduction of viscosity) of the polymer material. As such, a variety of rheology modification agents (e.g., solvents, depolymerization agents, plasticizers, and blending agents) can be used the enhance the flow and/or dispersibility of the liquified waste plastic.

When added to the liquification zone 18, at least 50, at least 55, at least 60, at least 65, at least 70, at least 75, at least 80, at least 85, at least 90, at least 95, or at least 99 weight percent of the plastic (usually waste plastic) originally present in the waste plastic stream 102 undergoes a reduction in viscosity. In some cases, the reduction in viscosity can be facilitated by heating (e.g., addition of steam directly or indirectly contacting the plastic), while, in other cases, it can be facilitated by combining the plastic with a solvent capable of dissolving it. Examples of suitable solvents can include, but are not limited to, alcohols such as methanol or ethanol, glycols such as ethylene glycol, diethylene glycol, triethylene glycol, neopentyl glycol, cyclohexanedimethanol, glycerin, pyrolysis oil, motor oil, and water. This dissolution solvent can be added directly to the liquification vessel in the liquification zone 18, or it can be previously combined with one or more streams fed to the liquification zone 18, including the waste plastic stream 102.

In an embodiment or in combination with any embodiment mentioned herein, the dissolution solvent can comprise a stream withdrawn from one or more other facilities within the chemical recycling facility 10. In certain embodiments, the dissolution solvent can be or comprise pyrolysis oil.

In some cases, the waste plastic can be depolymerized such that, for example, the number average chain length of the plastic is reduced by contact with a depolymerization agent. In an embodiment or in combination with any embodiment mentioned herein, at least one of the previously-listed solvents may be used as a depolymerization agent, while, in one or more other embodiments, the depolymerization agent can include an organic acid (e.g., acetic acid, citric acid, butyric acid, formic acid, lactic acid, oleic acid, oxalic, stearic acid, tartaric acid, and/or uric acid) or inorganic acid such as sulfuric acid (for polyolefins). The depolymerization agent may reduce the melting point and/or viscosity of the polymer by reducing its number average chain length.

Alternatively, or additionally, a plasticizer can be used in the liquification zone 18 to reduce the viscosity of the plastic. Plasticizers for polyethylene include, for example, dioctyl phthalate, dioctyl terephthalate, glyceryl tribenzoate, polyethylene glycol having molecular weight of up to 8,000 Daltons, sunflower oil, paraffin wax having molecular weight from 400 to 1,000 Daltons, paraffinic oil, mineral oil, glycerin, EPDM, and EVA. Plasticizers for polypropylene include, for example, dioctyl sebacate, paraffinic oil, isooctyl tallate, plasticizing oil (Drakeol 34), naphthenic and aromatic processing oils, and glycerin. Plasticizers for polyesters include, for example, polyalkylene ethers (e.g., polyethylene glycol, polytetramethylene glycol, polypropylene glycol or their mixtures) having molecular weight in the range from 400 to 1500 Daltons, glyceryl monostearate, octyl epoxy soyate, epoxidized soybean oil, epoxy tallate, epoxidized linseed oil, polyhydroxyalkanoate, glycols (e.g., ethylene glycol, pentamethylene glycol, hexamethylene glycol, etc.), phthalates, terephthalates, trimellitate, and polyethylene glycol di-(2-ethylhexoate). When used, the plasticizer may be present in an amount of at least 0.1, at least 0.5, at least 1, at least 2, or at least 5 weight percent and/or not more than 10, not more than 8, not more than 5, not more than 3, not more than 2, or not more than 1 weight percent, based on the total weight of the waste plastic stream 102, or it can be in a range of from 0.1 to 10 weight percent, 0.5 to 8 weight percent, or 1 to 5 weight percent, based on the total weight of the waste plastic stream 102.

Further, one or more of the methods of liquifying the waste plastic stream 102 can also include adding at least one blending agent to the plastic stream before, during, or after the liquification process in the liquification zone 18. Such blending agents may include for example, emulsifiers and/or surfactants, and may serve to more fully blend the liquified plastic into a single phase, particularly when differences in densities between the plastic components of a mixed plastic stream result in multiple liquid or semi-liquid phases. When used, the blending agent may be present in an amount of at least 0.1, at least 0.5, at least 1, at least 2, or at least 5 weight percent and/or not more than 10, not more than 8, not more than 5, not more than 3, not more than 2, or not more than 1 weight percent, based on the total weight of the waste plastic stream 102, or it can be in a range of from 0.1 to 10 weight percent, 0.5 to 8 weight percent, or 1 to 5 weight percent, based on the total weight of the waste plastic stream 102.

In an embodiment or in combination with any embodiment mentioned herein, at least a portion of the pyrolysis oil stream 106 withdrawn from the separation zone 20 can be combined with the waste plastic stream 102 to form a liquified plastic. Generally, in such embodiments, all or a portion of the pyrolysis oil stream 106 may be combined with the waste plastic stream 102 prior to introduction into the liquification zone 18, or after the waste plastic stream 102 enters the liquification vessel within the liquification zone 18.

In an embodiment or in combination with any embodiment mentioned herein, the liquified (or reduced viscosity) plastic stream 110 withdrawn from the liquification zone 18 can include at least 1, at least 5, at least 10, at least 15, at least 20, at least 25, at least 30, at least 35, at least 40, at least 45, at least 50, at least 55, at least 60, at least 65, at least 70, at least 75, at least 80, at least 85, at least 90, at least 95, or at least 99 weight percent and/or not more than 95, not more than 90, not more than 85, not more than 80, not more than 75, not more than 70, not more than 65, not more than 60, not more than 55, not more than 50, not more than 45, not more than 40, not more than 35, not more than 30, not more than 25, not more than 20, not more than 15, not more than 10, not more than 5, not more than 2, or not more than 1 weight percent of one or more polyolefins, based on the total weight of the stream, or the amount of polyolefins can be in the range of from 1 to 99 weight percent, 5 to 90 weight percent, or 10 to 85 weight percent, based on the total weight of the stream.

In an embodiment or in combination with any embodiment mentioned herein, the liquified plastic stream 110 exiting the liquification zone 18 can have a viscosity of less than 3,000, less than 2,500, less than 2,000, less than 1,500, less than 1,000, less than 800, less than 750, less than 700, less than 650, less than 600, less than 550, less than 500, less than 450, less than 400, less than 350, less than 300, less than 250, less than 150, less than 100, less than 75, less than 50, less than 25, less than 10, less than 5, or less than 1 poise, as measured using a Brookfield R/S rheometer with a V80-40 vane spindle operating at a shear rate of 10 rad/s and a temperature of 350°C. Note that 1 poise = 0.1 Pascal.seconds.

In an embodiment or in combination with any embodiment mentioned herein, the liquefied waste plastic stream 110 has a temperature of at least 200, at least 225, at least 250, at least 275, at least 300, at least 310, at least 320, at least 330, or at least 340 °C and/or less than 450, less than 425, less than 400, less than 375, or less than 350 °C.

In an embodiment or in combination with any embodiment mentioned herein, the liquification zone 18 may comprise at least one liquification vessel, such as a melt tank and/or an extruder, to facilitate the plastic liquification. Additionally, in certain embodiments, the liquification zone 18 may also contain at least one stripping column and at least one disengagement vessel to facilitate the removal of halogenated compounds that may be formed in the melt tank and/or the extruder.

In an embodiment or in combination with any embodiment mentioned herein, the liquification vessel(s), such as the melt tank and/or the extruder, may receive the waste plastic feed stream 102 and heat the waste plastic via heating mechanisms in the melt tank and/or via the extrusion process in the extruder.

In an embodiment or in combination with any embodiment mentioned herein, the melt tank can include one or more continuously stirred tanks. When one or more rheology modification agents (e.g., solvents, depolymerization agents, plasticizers, and blending agents) are used in the liquification zone 18, such rheology modification agents can be added to and/or mixed with the waste plastic stream 102 in or prior to introduction into the melt tank.

In an embodiment or in combination with any embodiment mentioned herein, the interior space of the liquification vessel, where the plastic is heated, is maintained at a temperature of at least 200, at least 210, at least 220, at least 230, at least 240, at least 250, at least 260, at least 270, at least 280, at least 290, at least 300, at least 310, at least 320, at least 330, at least 340, at least 350, at least 360, at least 370, at least 380, at least 390, or at least 400 °C. Additionally, or in the alternative, the interior space of the liquification vessel may be maintained at a temperature of not more than 500, not more than 475, not more than 450, not more than 425, not more than 400, not more than 390, not more than 380, not more than 370, not more than 365, not more than 360, not more than 355, not more than 350, or not more than 345 °C. Generally, in one or more embodiments, the interior space of the liquification vessel may be maintained at a temperature ranging from 200 to 500 °C, 240 to 425 °C, 280 to 380 °C, or 320 to 350 °C.

In an embodiment or in combination with any embodiment mentioned herein, the plastic fed into the liquification vessel may have a residence time in the liquification vessel of at least 1, at least 5, at least 10, at least 20, at least 30, at least 40, at least 50, or at least 60 minutes and/or not more than 10, not more than 9, not more than 8, not more than 7, not more than 6, not more than 5, not more than 4, or not more than 3 hours. Generally, in one or more embodiments, the plastic fed into the liquification vessel may have a residence time in the liquification vessel in the range of 1 minute to 10 hours, 30 minutes to 6 hours, or 60 minutes to 4 hours.

In an embodiment or in combination with any embodiment mentioned herein, the pressure within the liquification vessel may be maintained at a range from an absolute vacuum to 100 torr.

In an embodiment or in combination with any embodiment mentioned herein, the liquification zone 18 may optionally contain equipment for removing halogens from the waste plastic stream 102. When the waste plastic is heated in the liquification zone 18, halogen enriched gases can evolve. By disengaging the evolved halogen-enriched gasses from the liquified plastics, the concentration of halogens in the liquified plastic stream 110 can be reduced.

In an embodiment or in combination with any embodiment mentioned herein, dehalogenation can be promoted by sparging a stripping gas (e.g., steam) into the liquified plastics in the melt tank.

In an embodiment or in combination with any embodiment mentioned herein, the liquified plastic stream 110 exiting the liquification zone 18 can have a halogen content of less than 500, less than 400, less than 300, less than 200, less than 100, less than 50, less than 10, less than 5, less than 2, less than 1, less than 0.5, or less than 0.1 ppmv.

As shown in FIG. 1 and described below in greater detail, at least a portion of the liquified plastic stream 110 may be introduced into a downstream pyrolysis reactor 12 at a pyrolysis facility to produce a pyrolysis effluent, including pyrolysis oil and pyrolysis gas.

### Pyrolysis

As shown in FIG. 1, the chemical recycling facility 10 may comprise a pyrolysis facility including a pyrolysis reactor 12. As used herein the term "pyrolysis" refers to the thermal decomposition of one or more organic materials at elevated temperatures in an inert (i.e., substantially oxygen free) atmosphere. A "pyrolysis facility" is a facility that includes all equipment, lines, and controls necessary to carry out pyrolysis of waste plastic and feedstocks derived therefrom. In certain embodiments, the pyrolysis facility can comprise the pyrolysis reactor 12 and, optionally, the plastic liquification zone 18, a pyrolysis effluent separation zone 20, an HTM source 22, and an absorber system 24.

In general, the pyrolysis facility may include the plastic liquification zone 18, the pyrolysis reactor 12, the plastic liquification zone 18, the pyrolysis effluent separation zone 20, the HTM source 22, and the absorber system 24.

As depicted in FIG. 1, the liquified plastic stream 110 may be introduced into a downstream pyrolysis reactor 12 at the pyrolysis facility so as to produce a pyrolysis effluent stream 104.

In an embodiment or in combination with any embodiment mentioned herein, the liquified plastic stream 110 to the pyrolysis facility 12 may be a PO-enriched stream of waste plastic. The liquified plastic stream 110 introduced into the pyrolysis reactor 12 can be in the form of liquified plastic (e.g., liquified, melted, plasticized, depolymerized, or combinations thereof), plastic pellets or particulates, or a slurry thereof.

While in the pyrolysis reactor 12, at least a portion of the feed may be subjected to a pyrolysis reaction that produces a pyrolysis effluent comprising a pyrolysis oil, a pyrolysis gas, and a pyrolysis residue. Generally, the pyrolysis effluent stream 104 exiting the pyrolysis reactor 12 can be in the form of pyrolysis vapors that comprise the pyrolysis gas and uncondensed pyrolysis oil. As used herein, "pyrolysis vapor" refers to the uncondensed pyrolysis effluent that comprises the majority of the pyrolysis oil and the pyrolysis gas present in the pyrolysis effluent.

Pyrolysis is a process that involves the chemical and thermal decomposition of the introduced feed. Although all pyrolysis processes may be generally characterized by a reaction environment that is substantially free of oxygen, pyrolysis processes may be further defined, for example, by the pyrolysis reaction temperature within the reactor, the residence time in the pyrolysis reactor, the reactor type, the pressure within the pyrolysis reactor, and the presence or absence of pyrolysis catalysts.

In an embodiment or in combination with any embodiment mentioned herein, the pyrolysis reactor 12 can be, for example, a film reactor, a screw extruder, a tubular reactor, a tank, a stirred tank reactor, a riser reactor, a fixed bed reactor, a fluidized bed reactor, a rotary kiln, a vacuum reactor, a microwave reactor, or an autoclave. In various embodiments, the pyrolysis reactor 12 may comprise a film reactor, such as a falling film reactor or an up-flow film reactor.

In an embodiment or in combination with any embodiment mentioned herein, a lift gas and/or a feed gas may be used to introduce the feedstock into the pyrolysis reactor 12 and/or facilitate various reactions within the pyrolysis reactor 12. For instance, the lift gas and/or the feed gas may comprise, consist essentially of, or consist of nitrogen, carbon dioxide, and/or steam. The lift gas and/or feed gas may be added with the waste plastic stream 110 prior to introduction into the pyrolysis reactor 12 and/or may be added directly to the pyrolysis reactor 12. The lift gas and/or feed gas can include steam and/or a reducing gas such as hydrogen, carbon monoxide, and combinations thereof.

Furthermore, the temperature in the pyrolysis reactor 12 can be adjusted so as to facilitate the production of certain end products. In an embodiment or in combination with any embodiment mentioned herein, the pyrolysis temperature in the pyrolysis reactor 12 can range from 325 to 1,100°C, 350 to 900°C, 350 to 700°C, 350 to 650°C, 350 to 600°C, 425 to 1,100°C, 425 to 800°C, 500 to 700°C, 500 to 675°C, 600 to 700°C, 600 to 800°C, 650 to 800°C, or 650 to 700°C.

In an embodiment or in combination with any embodiment mentioned herein, the residence times of the feedstocks within the pyrolysis reactor 12 can be at least 0.1, at least 0.2, at least 0.3, at least 0.5, at least 1, at least 1.2, at least 1.3, at least 2, at least 3, or at least 4 seconds. Alternatively, the residence times of the feedstocks within the pyrolysis reactor 12 can be at least 1, at least 2, at least 3, at least 4, at least 5, at least 6, at least 7, at least 8, at least 9, at least 10, at least 20, at least 30, at least 45, at least 60, at least 75, or at least 90 minutes. Additionally, or alternatively, the residence times of the feedstocks within the pyrolysis reactor 12 can be less than 6, less than 5, less than 4, less than 3, less than 2, less than 1, or less than 0.5 hours. Furthermore, the residence times of the feedstocks within the pyrolysis reactor 12 can be less than 100, less than 90, less than 80, less than 70, less than 60, less than 50, less than 40, less than 30, less than 20, less than 10, less than 9, less than 8, less than 7, less than 6, less than 5, less than 4, less than 3, less than 2, or less than 1 seconds. More particularly, the residence times of the feedstocks within the pyrolysis reactor 12 can range from 0.1 to 10 seconds, 0.5 to 10 seconds, 30 minutes to 4 hours, or 30 minutes to 3 hours, or 1 hour to 3 hours, or 1 hour to 2 hours.

In an embodiment or in combination with any embodiment mentioned herein, the pressure within the pyrolysis reactor 12 can be maintained at atmospheric pressure or within the range of 0.1 to 100 bar, or 0.1 to 60 bar, or 0.1 to 30 bar, or 0.1 to 10 bar, 0.2 to 1.5 bar, or 0.3 to 1.1 bar. As used herein, the term "bar" refers to gauge pressure, unless otherwise noted.

In an embodiment or in combination with any embodiment mentioned herein, a pyrolysis catalyst may be introduced into the liquified plastic stream 110 prior to introduction into the pyrolysis reactor 12 and/or introduced directly into the pyrolysis reactor 12. The catalyst can be homogenous or heterogeneous and may include, for example, certain types of zeolites and other mesostructured catalysts. In some embodiments, the pyrolysis reaction may not be catalyzed (e.g., carried out in the absence of a pyrolysis catalyst), but may include a non-catalytic, heat-retaining inert additive, such as sand, in the reactor in order to facilitate the heat transfer. Such catalyst-free pyrolysis processes may be referred to as "thermal pyrolysis."

In one embodiment or in combination with one or more embodiments disclosed herein, the pyrolysis reaction performed in the pyrolysis reactor 12 can be carried out at a temperature of less than 700, less than 650, or less than 600°C and at least 300, at least 350, or at least 400°C. The feed to the pyrolysis reactor can comprise, consists essentially of, or consists of waste plastic. The feed stream, and/or the waste plastic component of the feed stream, can have a number average molecular weight (Mn) of at least 3000, at least 4000, at least 5000, or at least 6000 g/mole. If the feed to the pyrolysis reactor 12 contains a mixture of components, the Mn of the pyrolysis feed is the weighted average Mn of all feed components, based on the mass of the individual feed components. The waste plastic in the feed to the pyrolysis reactor can include post-consumer waste plastic, post-industrial waste plastic, or combinations thereof.

In certain embodiments, the feed to the pyrolysis reactor 12 comprises less than 5, less than 2, less than 1, less than 0.5, or about 0.0 weight percent coal and/or biomass (e.g., lignocellulosic waste, switchgrass, fats and oils derived from animals, fats and oils derived from plants, etc.), based on the weight of solids in pyrolysis feed or based on the weight of the entire pyrolysis feed. The feed to the pyrolysis reaction can also comprise less than 5, less than 2, less than 1, or less than 0.5, or about 0.0 weight percent of a co-feed stream, including steam, sulfur-containing co-feed streams, and/or non-plastic hydrocarbons (e.g., non-plastic hydrocarbons having less than 50, less than 30, or less than 20 carbon atoms), based on the weight of the entire pyrolysis feed other than water or based on the weight of the entire pyrolysis feed.

Additionally, or alternatively, the pyrolysis reactor 12 may comprise a film reactor, a screw extruder, a tubular reactor, a stirred tank reactor, a riser reactor, a fixed bed reactor, a fluidized bed reactor, a rotary kiln, a vacuum reactor, a microwave reactor, or an autoclave. The reactor 12 may also utilize a feed gas and/or lift gas for facilitating the introduction of the feed into the pyrolysis reactor. The feed gas and/or lift gas can comprise nitrogen and can comprise less than 5, less than 2, less than 1, or less than 0.5, or about 0.0 weight percent of steam and/or sulfur-containing compounds.

After exiting the pyrolysis reactor 12, at least a portion of the pyrolysis effluent 104 may be separated into the pyrolysis gas stream 108 and pyrolysis oil stream 106 in the separation zone 20. The separation zone 20 can include various types of equipment including, but not limited to, a filter system, a multistage separator, a condenser, and/or a quench tower. While the in the separation zone 20, the pyrolysis effluent 104, such as the pyrolysis vapors, may be cooled so as to condense the pyrolysis oil fraction originally present in the pyrolysis effluent 104.

In an embodiment or in combination with any embodiment mentioned herein, the pyrolysis effluent or pyrolysis vapors may comprise at least 1, at least 5, at least 10, at least 15, at least 20, at least 25, at least 30, at least 35, at least 40, at least 45, at least 50, at least 55, at least 60, at least 65, at least 70, or at least 75 weight percent of pyrolysis oil, based on the total weight of the pyrolysis effluent or pyrolysis vapors. Additionally, or alternatively, the pyrolysis effluent or pyrolysis vapors may comprise not more than 99, not more than 95, not more than 90, not more than 85, not more than 80, not more than 75, not more than 70, not more than 65, not more than 60, not more than 55, not more than 50, not more than 45, not more than 40, not more than 35, not more than 30, or not more than 25 weight percent of the pyrolysis oil, based on the total weight of the pyrolysis effluent or pyrolysis vapors. As discussed above, the pyrolysis oil may be in the form of uncondensed vapors in the pyrolysis effluent upon exiting the heated reactor 12; however, these vapors may be subsequently condensed into the resulting pyrolysis oil streams. The pyrolysis effluent or pyrolysis vapors may comprise in the range of 20 to 99 weight percent, 25 to 80 weight percent, 30 to 85 weight percent, 30 to 80 weight percent, 30 to 75 weight percent, 30 to 70 weight percent, or 30 to 65 weight percent of pyrolysis oil, based on the total weight of the pyrolysis effluent or pyrolysis vapors.

In an embodiment or in combination with any embodiment mentioned herein, the pyrolysis effluent or pyrolysis vapors may comprise at least 1, at least 5, at least 10, at least 15, at least 20, at least 25, at least 30, at least 35, at least 40, at least 45, at least 50, at least 55, at least 60, at least 65, at least 70, at least 75, or at least 80 weight percent of pyrolysis gas, based on the total weight of the pyrolysis effluent or pyrolysis vapors. Additionally, or alternatively, the pyrolysis effluent or pyrolysis vapors may comprise not more than 99, not more than 95, not more than 90, not more than 85, not more than 80, not more than 75, not more than 70, not more than 65, not more than 60, not more than 55, not more than 50, or not more than 45 weight percent of pyrolysis gas, based on the total weight of the pyrolysis effluent or pyrolysis vapors. The pyrolysis effluent may comprise 1 to 90 weight percent, 10 to 85 weight percent, 15 to 85 weight percent, 20 to 80 weight percent, 25 to 80 weight percent, 30 to 75 weight percent, or 35 to 75 weight percent of pyrolysis gas, based on the total weight of the stream.

In an embodiment or in combination with any embodiment mentioned herein, the pyrolysis effluent or pyrolysis vapors may comprise at least 0.5, at least 1, at least 2, at least 3, at least 4, at least 5, at least 6, at least 7, at least 8, at least 9, or at least 10 weight percent of the pyrolysis residue, based on the total weight of the pyrolysis effluent or pyrolysis vapors. Additionally, or alternatively, the pyrolysis effluent may comprise not more than 60, not more than 50, not more than 40, not more than 30, not more than 25, not more than 20, not more than 15, not more than 10, not more than 9, not more than 8, not more than 7, not more than 6, or not more than 5 weight percent of the pyrolysis residue, based on the total weight of the pyrolysis effluent or pyrolysis vapors. The pyrolysis effluent may comprise in the range of 0.1 to 25 weight percent, 1 to 15 weight percent, 1 to 8 weight percent, or 1 to 5 weight percent of the pyrolysis residue, based on the total weight of the pyrolysis effluent or pyrolysis vapors.

The resulting pyrolysis oil stream 106 and/or the pyrolysis gas stream 108 may be directly used in various downstream applications based on their formulations. The various characteristics and properties of the pyrolysis oil, pyrolysis gas, and pyrolysis residue are described below. It should be noted that, while all of the following characteristics and properties may be listed separately, it is envisioned that each of the following characteristics and/or properties of the pyrolysis gas, pyrolysis oil, and/or pyrolysis residue are not mutually exclusive and may be combined and present in any combination.

In an embodiment or in combination with any embodiment mentioned herein, the pyrolysis oil may predominantly comprise hydrocarbons having from 4 to 30 carbon atoms per molecule (e.g., C4 to C30 hydrocarbons). As used herein, the term "Cx" or "Cx hydrocarbon," refers to a hydrocarbon compound including "x" total carbons per molecule, and encompasses all olefins, paraffins, aromatics, heterocyclic, and isomers having that number of carbon atoms. For example, each of normal, iso, and tert-butane and butenes and butadiene molecules would fall under the general description "C4." The pyrolysis oil may have a C4-C30 hydrocarbon content of at least 55, at least 60, at least 65, at least 70, at least 75, at least 80, at least 85, at least 90, or at least 95 weight percent based on the total weight of the stream.

In an embodiment or in combination with any embodiment mentioned herein, the pyrolysis oil can predominantly comprise C5 to C25 hydrocarbons, C5 to C22 hydrocarbons, or C5 to C20 hydrocarbons. For example, the pyrolysis oil may comprise at least 55, at least 60, at least 65, at least 70, at least 75, at least 80, at least 85, at least 90, or at least 95 weight percent of C5 to C25 hydrocarbons, C5 to C22 hydrocarbons, or C5 to C20 hydrocarbons, based on the total weight of the stream.

In an embodiment or in combination with any embodiment mentioned herein, the pyrolysis oil may also include various amounts of olefins and aromatics depending on reactor conditions and whether or not a catalyst is employed. The pyrolysis oil may comprise at least 1, at least 5, at least 10, at least 15, at least 20, at least 25, at least 30, at least 35, or at least 40 weight percent of olefins and/or aromatics, based on the total weight of the pyrolysis oil stream 106. Additionally, or alternatively, the pyrolysis oil may include not more than 90, not more than 80, not more than 70, not more than 60, not more than 50, not more than 45, not more than 40, not more than 35, not more than 30, not more than 25, not more than 20, not more than 15, not more than 10, not more than 5, or not more than 1 weight percent of olefins and/or aromatics, based on the total weight of the stream. As used herein, the term "aromatics" refers to the total amount (in weight) of any compounds containing an aromatic moiety, such as benzene, toluene, xylene, and styrene.

In an embodiment or in combination with any embodiment mentioned herein, the pyrolysis oil may have a mid-boiling point in the range of 75 to 250°C, 90 to 225 °C, or 115 to 190 °C as measured according to ASTM D-5399. As used herein, "mid-boiling point" refers to the median boiling point temperature of the pyrolysis oil, where 50 percent by volume of the pyrolysis oil boils above the mid-boiling point and 50 percent by volume boils below the mid-boiling point.

In an embodiment or in combination with any embodiment mentioned herein, the boiling point range of the pyrolysis oil may be such that at least 90 percent of the pyrolysis oil boils off at a temperature of 250°C, of 280°C, of 290°C, of 300°C, or of 310°C, as measured according to ASTM D-5399.

Turning to the pyrolysis gas, the pyrolysis gas stream 108 can have a methane content in the range of 1 to 50 weight percent, 5 to 50 weight percent, or 15 to 45 weight percent, based on the total weight of the stream.

In an embodiment or in combination with any embodiment mentioned herein, the pyrolysis gas stream 108 can have a C3 and/or C4 hydrocarbon content (including all hydrocarbons having 3 or 4 carbon atoms per molecule) in the range of 10 to 90 weight percent, 25 to 90 weight percent, or 25 to 80 weight percent, based on the total weight of the stream.

In an embodiment or in combination with any embodiment mentioned herein, the pyrolysis gas stream 108 can have a combined ethylene and propylene content of at least 25, at least 40, at least 50, at least 60, at least 70, or at least 75 weight percent, based on the total weight of the stream.

Turning to the pyrolysis residue, in an embodiment or in combination with any embodiment mentioned herein, the pyrolysis residue comprises at least 20, at least 25, at least 30, at least 35, at least 40, at least 45, at least 50, at least 55, at least 60, at least 65, at least 70, at least 75, at least 80, or at least 85 weight percent of C20+ hydrocarbons based on the total weight of the pyrolysis residue. As used herein, "C20+ hydrocarbon" refers to hydrocarbon compounds containing at least 20 total carbons per molecule, and encompasses all olefins, paraffins, and isomers having that number of carbon atoms.

In an embodiment or in combination with any embodiment mentioned herein, at least a portion of the pyrolysis oil stream 106, the pyrolysis gas stream 108, and/or the pyrolysis residue may be routed to one or more other chemical processing facilities, including, for example, the cracking facility 14. In some embodiments, at least a portion of the pyrolysis oil stream 106 and/or the pyrolysis gas stream 108 may be routed to one or more separation facilities (not shown in FIG. 1) to thereby form more purified streams of the pyrolysis gas, pyrolysis oil, and/or pyrolysis residue, which may then be routed to the cracking facility 14. As shown in FIG. 1, at least a portion of the pyrolysis oil stream 106 and/or the pyrolysis gas stream 108 may be routed to the cracking facility 14.

In an embodiment or in combination with any embodiment mentioned herein, at least a portion of the pyrolysis gas stream 108 may be routed to an absorber system 24 so as to recover at least a portion of the carbon dioxide present in the pyrolysis gas stream 108.

In an embodiment or in combination with any embodiment mentioned herein, the pyrolysis reactor 12 may comprise one or more heating systems (not shown) for providing the necessary heat to the pyrolysis reactor 12. Exemplary heating systems may include one or more furnaces comprising one or more burners. Generally, the heating systems may burn a fuel to thereby provide the necessary heat for the pyrolysis reaction. As shown in FIG. 1, the heating system of the pyrolysis reactor 12 may thereby provide a pyrolysis flue gas stream 112. As described below in greater detail, at least a portion of this pyrolysis flue gas stream 112 may be fed into an absorber system 24 so as to produce a CO₂-depleted stream 126 and a recovered CO₂ stream 128.

In an embodiment or in combination with any embodiment mentioned herein, at least a portion of the pyrolysis oil stream 106 and/or the pyrolysis gas stream 108 may be routed through an optional heat exchanger so as to further cool the streams prior to further downstream processing. This heat exchanger may utilize a heat transfer medium to remove heat energy from the pyrolysis oil stream 106 and/or the pyrolysis gas stream 108 via indirect heat exchange. Any conventional heat exchange medium may be used. In certain embodiments, the heat exchange medium comprises steam, water, an oil, a siloxane, a molten metal, a molten salt, or a combination thereof.

In an embodiment or in combination with any embodiment mentioned herein, at least a portion of the pyrolysis oil stream 106 and/or the pyrolysis gas stream 108 may be cooled via indirect heat exchange in a heat exchanger to a temperature of not more than 100, not more than 75, or not more than 50 °C. In certain embodiments, at least a portion of the pyrolysis oil stream 106 and/or the pyrolysis gas stream 108 may be cooled via indirect heat exchange in heat exchanger 40 to a temperature of 25 to 45 or 30 to 40 °C.

### Cracking

In an embodiment or in combination with any embodiment mentioned herein, at least a portion of one or more streams from the pyrolysis facility, including the pyrolysis oil stream 106 and/or the pyrolysis gas stream 108, may be introduced into a cracking facility 14. As used herein, the term "cracking" refers to breaking down complex organic molecules into simpler molecules by the breaking of carbon-carbon bonds. A "cracking facility" is a facility that includes all equipment, lines, and controls necessary to carry out cracking of a feedstock derived from waste plastic. A cracking facility can include one or more cracker furnaces, as well as a downstream separation zone including equipment used to process the effluent of the cracker furnace(s). As used herein, the terms "cracker" and "cracking" are used interchangeably.

In general, the cracker facility 14 may include a cracker furnace and a separation zone downstream of the cracker furnace for separating the furnace effluent into various High Value Chemical Products (HVCP), such as a recycle content olefins (r-olefins) and a residual CO₂ stream. As used herein, "High Value Chemical Products" or "HVCP" refer to chemical products produced by the associated process that may be: (i) sold, (ii) used in a downstream process, and/or (iii) used in a downstream product and are not removed as a waste stream for disposal or recycled as a fuel. In regard to the cracking facility, the HVCP can include recycle content olefins.

The residual CO₂ stream produced by the cracking facility 14 may be recycled back to the facility 10 for use within the facility 10 and/or removed from the facility 10.

In an embodiment or in combination with any embodiment mentioned herein, at least a portion of the pyrolysis oil stream 106 and/or the pyrolysis gas stream 108 can be sent to the cracking facility 14. The pyrolysis oil stream 106 may be introduced into an inlet of the cracker furnace along with a cracker feed, while the pyrolysis gas stream 108 can be introduced into a location upstream or downstream of the furnace. A stream of paraffin (e.g., ethane and/or propane) may be withdrawn from the separation zone and may include recycle-content paraffin (r-paraffin). When used, at least a portion of the pyrolysis oil stream 106 may optionally be combined with a stream of cracker feed to form the feed stream to the cracking facility 14.

In some embodiments, the cracker feed stream can include a hydrocarbon feed other than pyrolysis gas and pyrolysis oil in an amount of from 5 to 95 weight percent, 10 to 90 weight percent, or 15 to 85 weight percent, based on the total weight of the cracker feed.

In an embodiment or in combination with any embodiment mentioned herein, the cracker facility 14 may comprise a single cracking furnace, or it can have at least 2, or at least 3, or at least 4, or at least 5, or at least 6, or at least 7, or at least 8 or more cracking furnaces operated in parallel. Any one or each furnace(s) may be gas cracker, or a liquid cracker, or a split furnace.

The cracker feed stream, along with the pyrolysis oil and/or pyrolysis gas, may pass through the cracking furnace, wherein the hydrocarbon components therein are thermally cracked to form lighter hydrocarbons, including olefins such as ethylene, propylene, and/or butadiene. The residence time of the cracker stream in the furnace can be in the range of from 0.15 to 2 seconds, 0.20 to 1.75 seconds, or 0.25 to 1.5 seconds.

The temperature of the cracked olefin-containing effluent withdrawn from the furnace outlet can be in the range of from 730 to 900 °C, 750 to 875 °C, or 750 to 850 °C.

In an embodiment or in combination with any embodiment mentioned herein, the HVCP stream withdrawn from the cracking facility 14 can comprise at least 10, at least 15, at least 20, at least 25, at least 30, at least 35, at least 40, at least 45, at least 50, at least 55, at least 60, at least 65, at least 70, at least 75, at least 80, at least 85, or at least 90 weight percent of C2 to C4 olefins, based on the total weight of the HVCP stream. The HVCP stream may comprise predominantly ethylene, predominantly propylene, or predominantly ethylene and propylene, based on the total weight of the stream.

In an embodiment or in combination with any embodiment mentioned herein, when introduced into the cracker facility 14, the pyrolysis gas 108 may be introduced into the inlet of the cracker furnace, or all or a portion of the pyrolysis gas 108 may be introduced downstream of the furnace outlet, at a location upstream of or within the separation zone of the cracker facility 14. When introduced into or upstream of the separation zone, the pyrolysis gas 108 can be introduced upstream of the last stage of compression, or prior to the inlet of at least one fractionation column in a fractionation section of the separation zone.

Upon exiting the cracker furnace outlet, the HVCP stream may be cooled rapidly (e.g., quenched) in order to prevent production of large amounts of undesirable by-products and to minimize fouling in downstream equipment.

In one embodiment or in combination with one or more embodiments disclosed herein, the cracker furnace can be operated at a product outlet temperature (e.g., coil outlet temperature) of at least 700, at least 750, at least 800, or at least 850°C. The feed to the cracker furnace can have a number average molecular weight (Mn) of less than 3000, less than 2000, less than 1000, or less than 500 g/mole. If the feed to the cracker furnace contains a mixture of components, the Mn of the cracker feed is the weighted average Mn of all feed components, based on the mass of the individual feed components. The feed to the cracker furnace can comprise less than 5, less than 2, less than 1, less than 0.5, or 0.0 weight percent of coal, biomass, and/or solids. In certain embodiments, a co-feed stream, such as steam or a sulfur-containing stream (for metal passivation) can be introduced into the cracker furnace. The cracker furnace can include both convection and radiant sections and can have a tubular reaction zone (e.g., coils in one or both of the convection and radiant sections). Typically, the residence time of the streams passing through the reaction zone (from the convection section inlet to the radiant section outlet) can be less than 20 seconds, less than 10 seconds, less than 5 seconds, or less than 2 seconds.

As shown in FIG. 1, at least a portion of a demethanizer overhead stream 116, which is derived from the cracking facility 14, is used as a fuel in a pyrolysis facility and/or a cracking facility 14. In such embodiments, the demethanizer overhead stream 116 may be used as a fuel to power the furnaces, combustion units, or other heating systems used in the pyrolysis facility and/or the cracking facility 14.

In an embodiment or in combination with any embodiment mentioned herein, at least a portion of one or more of the above streams may be introduced into one or more of the facilities shown in FIG. 1, while, in other embodiments, all or a portion of the streams withdrawn from the separation zone of the cracking facility may be routed to further separation and/or storage, transportation, sale, and/or use.

### Pyrolysis Effluent Heat Integration

As noted above, we have discovered that the carbon footprint and global warming potential of the chemical recycling facility 10 may be lowered by recycling residual heat from the pyrolysis effluent back into the chemical recycling process. As shown in FIG. 1, the chemical recycling facility 10 may contain at least one heat transfer medium loop 114 containing at least one heat transfer medium that can transfer at least a portion of the heat energy from the pyrolysis effluent 104, pyrolysis oil stream 106, and/or the pyrolysis gas stream 108 back to the plastic liquification zone 18. The heat transfer medium loop 114 may be in fluid communication with an HTM source 22, which may provide the heat transfer medium. The HTM source 22 can include any source or producer of heat transfer medium and, in certain embodiments, may comprise a tank, a reservoir, or a steam generator. The HTM source 22 may add and/or remove heat transfer medium from the HTM loop 114.

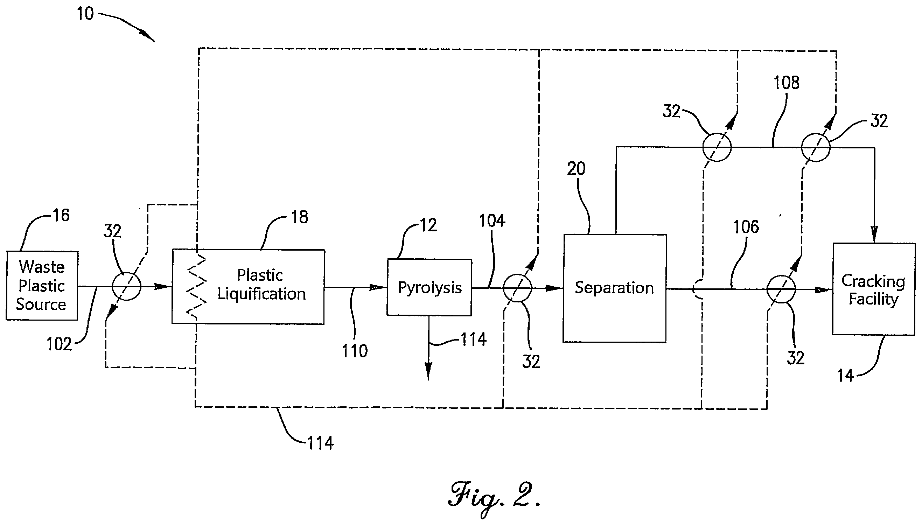

As shown in FIG. 2, the heat transfer medium in the heat transfer medium loop 114 may recover heat energy from at least a portion of the pyrolysis effluent 104, the pyrolysis oil stream 106, and/or the pyrolysis gas stream 108 via heat exchangers 32. While in these heat exchangers 32, the heat transfer medium can recover at least a portion of the heat energy from the pyrolysis effluent 104, the pyrolysis oil stream 106, and/or the pyrolysis gas stream 108 via indirect heat exchange, which can then form a heated heat transfer medium and a cooled process stream (e.g., a cooled pyrolysis effluent, a cooled pyrolysis oil stream 106, and/or a cooled pyrolysis gas stream). The heat exchangers 32 can comprise any conventional cross-flow heat exchangers known in the art, such as a transfer line exchanger. In certain embodiments, the heat exchangers 32 may comprise a brazed aluminum heat exchanger comprising a plurality of cooling and warming passes (e.g., cores) disposed therein for facilitating indirect heat exchange between one or more process streams and at least one heat transfer medium stream. Although generally illustrated in FIG. 2 as comprising a single core or "shell," it should be understood that the heat exchangers 32 can, in some embodiments, comprise two or more separate core or shells.

In an embodiment or in combination with any embodiment mentioned herein, the heat transfer medium in the heat transfer medium loop 114 may recover heat energy from at least a portion of the pyrolysis effluent 104 to thereby form a heated heat transfer medium and a cooled pyrolysis effluent stream. During such embodiments, the heat transfer medium may or may not also recover heat energy from at least a portion of the pyrolysis oil stream 106 and/or the pyrolysis gas stream 108.

In an embodiment or in combination with any embodiment mentioned herein, the heat transfer medium in the heat transfer medium loop 114 may recover heat energy from at least a portion of the pyrolysis oil stream 106 and the pyrolysis gas stream 108 to thereby form a heated heat transfer medium, a cooled pyrolysis oil stream, and a cooled pyrolysis gas stream. In such embodiments, the heat transfer medium may first recover heat energy from the lower-temperature pyrolysis gas stream 106 and then subsequently recover heat energy from the higher-temperature pyrolysis gas stream 108. Furthermore, in such embodiments, the heat transfer medium may or may not also recover heat energy from at least a portion of the pyrolysis effluent 104.

In an embodiment or in combination with any embodiment mentioned herein, the heat transfer medium in the heat transfer medium loop 114 may recover heat energy from at least a portion of the pyrolysis gas stream 108 to thereby form a heated heat transfer medium and a cooled pyrolysis gas stream. During such embodiments, the heat transfer medium may or may not also recover heat energy from at least a portion of the pyrolysis effluent 104 and/or the pyrolysis oil stream 106.

After indirect heat exchange with the pyrolysis effluent 104, the pyrolysis oil stream 106, and/or the pyrolysis gas stream 108, the temperature of the heat transfer medium in the heat transfer medium loop 114 can increase by at least 25, at least 50, at least 75, at least 100, at least 125, at least 150, at least 175, or at least 200 °C and/or not more than 400, not more than 350, not more than 300, or not more than 250 °C.

In an embodiment or in combination with any embodiment mentioned herein, after indirect heat exchange with the pyrolysis effluent 104, the pyrolysis oil stream 106, and/or the pyrolysis gas stream 108, the heated heat transfer medium may have a temperature of at least 150, at least 175, at least 200, at least 210, at least 220, at least 230, at least 240, at least 250, at least 260, at least 270, at least 280, at least 290, at least 300, at least 320, at least 340, at least 350, at least 360, at least 370, at least 380, at least 390, or at least 400 °C. Additionally, or alternatively, after indirect heat exchange with the pyrolysis effluent 104, the pyrolysis oil stream 106, and/or the pyrolysis gas stream 108, the heated heat transfer medium may have a temperature of less than 600, less than 550, less than 500, less than 450, less than 400, less than 390, less than 380, less than 370, less than 360, less than 350, less than 340, less than 330, less than 320, less than 310, less than 300, or less than 290 °C. In various embodiments, after indirect heat exchange with the pyrolysis effluent 104, the pyrolysis oil stream 106, and/or the pyrolysis gas stream 108, the heated heat transfer medium may have a temperature in the range of 200 to 600 °C, 250 to 550 °C, 290 to 500 °C, or 300 to 450 °C.

Turning again to FIG. 2, after withdrawing heat energy from the pyrolysis effluent 104, the pyrolysis oil stream 106, and/or the pyrolysis gas stream 108, at least a portion of the heat transfer medium in the heat transfer medium loop 114 may be routed to the plastic liquification zone 18. While in the liquification zone 18, the heated heat transfer medium may provide heat energy to the plastic liquification processes described herein. For example, the liquification vessel (e.g., the melt tank and/or extruder) may comprise: (i) internal coils through which the heated transfer medium can flow and/or (ii) external coils and/or jacketing that allows the heated heat transfer medium to flow therethrough and thereby provide heat energy to the plastic liquification process occurring in the liquification vessel.

In an embodiment or in combination with any embodiment mentioned herein, the heated heat transfer medium may provide heat energy via indirect heat exchange to the plastic liquification zone 18 by: (i) routing the heated heat transfer medium through one or more internal coils within the liquification vessel (e.g., a melt tank, a CSTR, and/or an extruder); (ii) routing the heated heat transfer medium through one or more external coils outside of the liquification vessel (e.g., a melt tank, a CSTR, and/or an extruder); (iii) routing the heated heat transfer medium through a heating jacket positioned outside of the liquification vessel (e.g., a melt tank, a CSTR, and/or an extruder); and/or (iv) routing the heated heat transfer medium through an external heat exchanger (not shown) within the liquification zone 18.

Additionally, or alternatively, as shown in FIG. 2, at least a portion of the heated heat transfer medium may also provide heat energy to the waste plastic feed stream 102 prior to introducing the waste plastic feed stream 102 into the liquification zone 18. Consequently, this can further heat the waste plastics in the waste plastic feed stream 102. Thus, due to its increased temperature, the heated the waste plastic feed stream 102 can further facilitate the plastic liquification processes occurring in the liquification zone 18.

Furthermore, although FIG. 2 depicts only one heat transfer medium loop 114 being present, it is possible for multiple HTM loops to be present within the facility 10. In certain embodiments, the facility 10 may comprise at least 2, at least 3, at least 4, at least 5, or at least 6 and/or less than 20, less than 15, less than 10, less than 8, less than 6, or less than 4 HTM loops. Furthermore, each HTM loop may contain its own type of heat transfer medium and may utilize different heating and cooling pathways from the other HTM loops. For example, the facility may comprise: (i) a first HTM loop comprising an aqueous heat transfer medium (e.g., steam), which derives its heat energy only from the pyrolysis effluent 104 and applies the heat energy to waste plastic stream 102 and (ii) a second HTM loop comprising a non-aqueous heat transfer medium (e.g., THERMINOL^{®}), which derives its heat energy only from the pyrolysis gas stream 108 and applies the heat energy to the liquification vessel directly. Thus, any of the HTM loops may contain any of the heat transfer media described herein and may derive and apply heat energy in any of the configurations described above.

The heat transfer medium can be any conventional heat transfer medium known in the art. In an embodiment or in combination with any embodiment mentioned herein, the heat transfer medium can be a non-aqueous fluid or an aqueous fluid (e.g., water and/or steam). The heat transfer medium may also be a single-phase medium (e.g., liquid or vapor) or a two-phase medium (e.g., liquid/vapor) while in the loop 114. In certain embodiments, the heat transfer medium may be in a liquid phase prior to heating (e.g., water) and then transition to another phase (e.g., steam) or a mixed phase (e.g., water/steam) upon heating.

In an embodiment or in combination with any embodiment mentioned herein, the heat transfer medium comprises a non-aqueous heat transfer medium. Examples of suitable non-aqueous heat transfer fluids that can be used as the heat transfer medium includes an oil, a siloxane, a molten metal, a molten salt, or a combination thereof.

In an embodiment or in combination with any embodiment mentioned herein, the heat transfer medium comprises a non-aqueous fluid, such as a synthetic oil (e.g., THERMINOL^{®}), a refined oil (e.g., a mineral oil), or a combination thereof. As used herein, a "refined oil" refers to a natural (i.e., non-synthetic) oil that has been subjected to a distillation and/or or purification step.

In an embodiment or in combination with any embodiment mentioned herein, the heat transfer medium comprises a siloxane.

In an embodiment or in combination with any embodiment mentioned herein, the heat transfer medium comprises a molten salt. Exemplary molten salts include sodium chloride, sodium nitrate, potassium nitrate, or a combination thereof.

In an embodiment or in combination with any embodiment mentioned herein, the heat transfer medium comprises a molten metal. Exemplary molten metals can include lithium, gallium, sodium, cadmium, potassium, indium, lead, tin, bismuth, thallium, or a combination thereof.

In an embodiment or in combination with any embodiment mentioned herein, the heat transfer medium comprises an aqueous fluid, such as steam and/or water. If the heat transfer medium comprises steam, then the heat transfer medium loop 114 may be in fluid communication with an HTM source 22 that provides the steam and/or water. In certain embodiments, the HTM source 22 may generate the heat transfer medium from boiler feed water derived from the cracker facility 14. Additionally, or alternatively, the HTM source 22 may also comprise a temperator for adding additional heat energy to the heat transfer medium that is provided.

In an embodiment or in combination with any embodiment mentioned herein, the heat transfer medium comprises steam. The steam can comprise a pressure of at least 700, at least 800, at least 900, at least 1,000, at least 1,100, at least 1,200, at least 1,300, at least 1,400, at least 1,500, or at least 1590 psi and/or less than 2,000, less than 1,800, less than 1,700, or less than 1,650 psi. In certain embodiments, the steam can comprise 1,600 psi steam. Note that 1 bar is 14,5 psi.

### The Absorber System

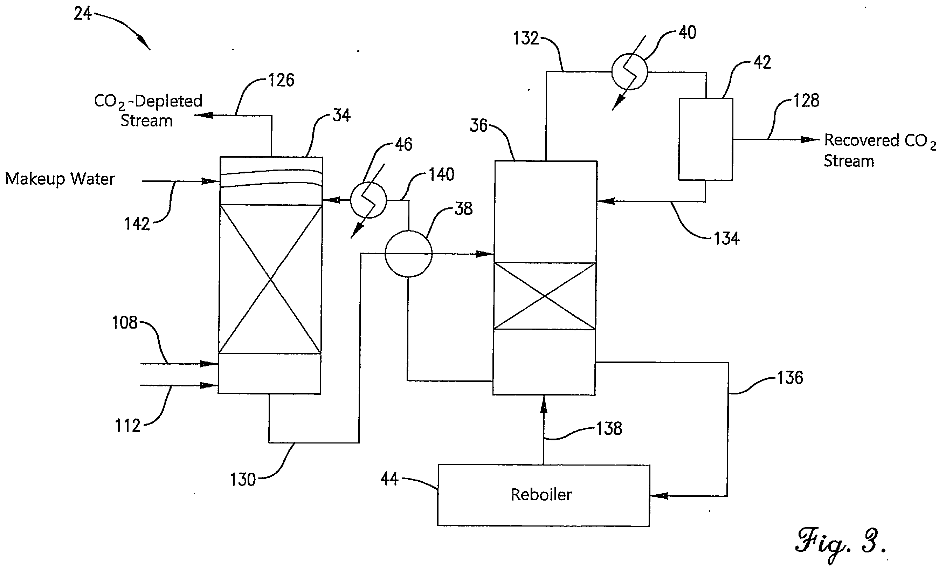

As noted above, we have discovered that the carbon footprint and global warming potential of the chemical recycling facility 10 may be lowered by recovering (e.g., via capturing and/or sequestering) a recovered CO₂ stream 128 from at least a portion of the pyrolysis flue gas stream 112 and/or at least a portion of the pyrolysis gas stream 108. As shown in FIG. 1, the pyrolysis gas stream 108 and the pyrolysis flue gas stream 112 may be treated in separate absorber systems 24. Although the pyrolysis gas stream 108 and the pyrolysis flue gas stream 112 may be treated in separate absorber systems 24, these absorber systems 24 may contain the same equipment and operate in the same manner, as described below in regard to FIG. 3.

As shown in FIG. 3, at least a portion of the pyrolysis gas stream 108 or at least a portion of the pyrolysis flue gas stream 112 may be introduced into an absorber system 24 comprising at least one absorber tower 34 and at least one stripper/regenerator tower 36. Although only a single absorber tower 34 and stripper/regenerator tower 36 are shown in FIG. 3, the absorber system 24 can comprise one or more absorber towers 34 and one or more stripper/regenerator towers 36. The absorber tower(s) 34 and stripper/regenerator tower(s) 36 may be constructed to appropriate size and specification as understood in the art, based on the compositions of the feed streams and flow rate and the absorber solvent used.

As shown in FIG. 3, at least a portion of the pyrolysis gas stream 108 or at least a portion of the pyrolysis flue gas stream 112 may be introduced into one or more absorber towers 34, where the stream(s) contact an absorber solvent (i.e., a lean absorber solvent) that is concurrently introduced into the one or more absorber towers 34. Upon contact, at least a portion of the carbon dioxide and/or other impurities in at least a portion of the pyrolysis gas stream 108 and/or at least a portion of the pyrolysis flue gas stream 112 may be absorbed and removed in the resulting rich absorber solvent stream 130.

Generally, the absorber solvent can comprise an organic solvent. In an embodiment or in combination with any embodiment mentioned herein, the absorber solvent can comprise an absorbing component selected from the group consisting of amines, methanol, sodium hydroxide, sodium carbonate/bicarbonate, potassium hydroxide, potassium carbonate/bicarbonate, SELEXOL^{®}, glycol ether, and combinations thereof. The absorbing component may comprise an amine selected from the group consisting of diethanolamine (DEA), monoethanolamine (MEA), methyldiethanolamine (MDEA), diisopropanolamine (DIPA), diglycolamine (DGA), piperazine, modifications, derivatives, and combinations thereof.

The resulting CO₂-depleted stream 126 exits the absorber tower(s) 34 overhead and is generally depleted in carbon dioxide relative to the pyrolysis flue gas stream 112 and/or the pyrolysis gas stream 108 fed into the absorber tower(s) 34.

The absorbed carbon dioxide in the rich absorber solvent stream 130 can be removed from the absorber solvent in the stripper/regeneration tower(s) 36. Within the stripper/regeneration tower(s) 36, the carbon dioxide can be stripped from the rich absorber solvent by contacting the solvent with water/steam. The overhead stream 132 comprising steam and carbon dioxide may then be cooled and at least partially condensed in a condensation tank 42 to remove the carbon dioxide gas, and the residual water stream 134 is recycled back into the stripper/regeneration tower(s) 36. The recovered carbon dioxide gas may be removed as the recovered CO₂ stream 128. After CO₂ removal, the resulting lean absorber solvent stream 140 may be recycled back to the absorber tower 34. Thus, a regenerative absorber system can be used between the absorber tower 34 and the stripper/regeneration tower(s) 36, where the rich absorber solvent stream 130 is sent from the absorber column 34 to the stripper/regeneration tower(s) 36 via stream 130 and the lean absorber solvent stream 140 is returned from the stripper/regeneration tower(s) 36 to the absorber tower 34.

In certain embodiments, a heat exchanger 40 may be used to further cool and enhance the condensation of the overhead stream 132. This heat exchanger 40 may utilize a heat transfer medium to remove heat energy from the overhead stream 132 via indirect heat exchange. Any conventional heat exchange medium may be used. In certain embodiments, the heat exchange medium comprises steam, water, an oil, a siloxane, a molten metal, a molten salt, or a combination thereof.

The absorber system 24 may further comprise one or more additional components or processes as understood in the art for appropriate operation of the system. For example, in some embodiments, a cross-heat exchanger 38 may be utilized to provide appropriate heating and cooling to the absorber solvent, particularly between the rich absorber solvent stream 130 and the lean absorber solvent stream 140. In some embodiments, an additional heat exchanger 46 may be used to further provide heating/cooling to the lean absorber solvent stream 140 being introduced into the absorber tower 34. This heat exchanger 46 may utilize a heat transfer medium to remove heat energy from the absorber solvent stream 140 via indirect heat exchange. Any conventional heat exchange medium may be used. In certain embodiments, the heat exchange medium comprises steam, water, an oil, a siloxane, a molten metal, a molten salt, or a combination thereof. Additionally, or alternatively, the absorber tower 34 may also comprise a makeup water line 142 to introduce additional water as deemed necessary by the process.

It should be noted that heat exchangers 40 and 46 can comprise any conventional cross-flow heat exchangers known in the art, such as a transfer line exchanger. In certain embodiments, the heat exchangers may comprise a brazed aluminum heat exchanger comprising a plurality of cooling and warming passes (e.g., cores) disposed therein for facilitating indirect heat exchange between one or more process streams and at least one heat transfer medium stream. Although generally illustrated in FIG. 3 as comprising a single core or "shell," it should be understood that the heat exchangers can, in some embodiments, comprise two or more separate core or shells.

As shown in FIG. 3, the stripper/regeneration tower 36 generally comprises at least one reboiler 44, which operates at a temperature high enough to release the carbon dioxide from the absorber solvent, but below the degradation temperature of the absorber solvent. A bottom stream 136 from the stripper/regeneration tower(s) 36 may be introduced into the reboiler 44 to form a vapor overhead stream 138, which is reintroduced back into the stripper/regeneration tower 36. In an embodiment or in combination with any embodiment mentioned herein, the reboiler operates at a temperature of 105 to 150 °C, 105 to 145 °C, 105 to 140 °C, 105 to 130 °C, 110 to 125 °C, 115 to 120 °C.

In an embodiment or in combination with any embodiment mentioned herein, the CO₂-depleted stream 126 comprises not more than 1000 ppmv, not more than 500 ppmv, not more than 400 ppmv, not more than 300 ppmv, not more than 200 ppmv, or not more than 100 ppmv carbon dioxide. In some embodiments, the CO₂-depleted stream 126 is also depleted in sulfur and/or sulfur-containing compounds (e.g., H₂S) relative to the pyrolysis flue gas stream 112 and/or the pyrolysis gas stream 108 fed into the absorber tower(s) 34.

In an embodiment or in combination with any embodiment mentioned herein, the CO₂-depleted stream 126 comprises not more than 5, not more than 3, not more than 2, not more than 1.5, not more than 1.0, not more than 0.5, or not more than 0.1 molar percent of CO₂, based on the total mole content of the CO₂-depleted stream.

In an embodiment or in combination with any embodiment mentioned herein, the CO₂-depleted stream 126 comprises not more than 10, not more than 5, not more than 3, not more than 2, not more than 1.5, not more than 1.0, or not more than 0.5 percent of the CO₂ originally present in the pyrolysis flue gas stream 112 and/or the pyrolysis gas stream 108.

In various embodiments, at least a portion of the CO₂-depleted stream 126 may be removed from the facility 10. Additionally, or alternatively, at least a portion of the CO₂-depleted stream 126 may be combined with at least a portion of the pyrolysis gas stream 108 and removed from the facility 10 for downstream processing or other end products.

In an embodiment or in combination with any embodiment mentioned herein, the recovered CO₂ stream 128 is enriched in CO₂ concentration relative to the pyrolysis gas stream 108 or the pyrolysis flue gas stream 112. For example, the recovered CO₂ stream 128 may comprise at least 30, at least 35, at least 40, at least 45, at least 50, at least 55, at least 60, at least 65, at least 70, at least 75, at least 80, at least 85, at least 90, at least 95, at least 96, at least 97, at least 98, or at least 99 percent of the CO₂ originally present in the pyrolysis gas stream 108 or the pyrolysis flue gas stream 112.

Due to the absorber system 24, the recovered CO₂ stream 128 comprises a significantly higher amount of CO₂ relative to the CO₂-depleted stream 126. In an embodiment or in combination with any embodiment mentioned herein, the recovered CO₂ stream 128 comprises at least 50, at least 75, at least 80, at least 85, at least 90, at least 95, at least 96, or at least 97 mole percent of CO₂, based on the total molar content of the recovered CO₂ stream. In such embodiments, at least a portion or all of the recovered CO₂ in the recovered CO₂ stream 128 may be considered recycle content CO₂ since it may be directly and/or indirectly derived from waste plastic. Thus, the recovered CO₂ stream 128 may be referred to as a recovered r-CO₂ stream that comprises at least 50, at least 75, at least 80, at least 85, at least 90, at least 95, at least 96, or at least 97 mole percent of r-CO₂, based on the total molar content of the recovered CO₂ stream.

In an embodiment or in combination with any embodiment mentioned herein, the recovered CO₂ stream 128 comprises at least 0.1, at least 0.5, at least 1, at least 2, or at least 2.5 and/or not more than 10, not more than 5, not more than 4, or not more than 3 mole percent of water, based on the total molar content of the recovered CO₂ stream.

In an embodiment or in combination with any embodiment mentioned herein, the recovered CO₂ stream 128 comprises not more than 1,000 ppmv, not more than 500 ppmv, or not more than 200 ppmv of an absorber solvent, based on the total molar content of the recovered CO₂ stream.

In an embodiment or in combination with any embodiment mentioned herein, the recovered CO₂ stream 128 and/or the CO₂-depleted stream 126 has a temperature of at least 25, at least 30, at least 40, at least 45, or at least 50 and/or not more than not more than 100, not more than 75, not more than 70, not more than 65, or not more than 60 °C upon exiting the absorber system 24.

The recovered CO₂ stream 128 may be removed from the system and used to produce various end products (e.g., as a feedstock to synthesize various chemicals and food products, such as carbonation) and/or further processed in downstream facilities.

### Measuring and Lowering the Carbon Footprint of the Chemical Recycling Facility

As noted above, we have discovered numerous ways for reducing the carbon footprint of the facility, including: (i) recycling at least a portion of the residual heat energy from the pyrolysis effluent back upstream to the pyrolysis process and waste plastic liquification stage; (ii) recovering at least a portion of the carbon dioxide from at least a portion of the pyrolysis flue gas and/or at least a portion of the pyrolysis gas; (iii) feeding at least a portion of the pyrolysis gas at a cracker facility at a position downstream of a cracker furnace; (iv) using at least a portion of a demethanizer overhead stream as a fuel in a pyrolysis facility and/or a cracking facility; and (v) providing a chemical recycling facility that contains a pyrolysis facility co-located with a cracking facility. All of these mechanisms and configurations are described above in regard to FIGS. 1-3. Consequently, by utilizing the above methods and configurations, we can lower the carbon footprint and global warming potential of the combined facilities described herein. The effects of the above methodologies and configurations on the carbon footprint of the chemical recycling facility can be quantified using a life cycle assessment (LCA).

The LCA is a leading tool for assessing the carbon footprint of a process, which is a method defined by the International Organization for Standardization (ISO) 14040 and14044 standards. The LCA is an internationally recognized approach that evaluates the relative potential environmental impacts of products and services throughout their life cycle, beginning with raw material extraction and including all aspects of transportation, manufacturing, use, and end-of-life treatment. Individual LCA study boundaries can be established to define how many of these aspects are to be investigated. The system boundaries used to assess the facility 10 depicted in FIG. 1 are "cradle-to-gate", which includes impacts from raw material and resource extraction through the final material processing step before shipping to the customer. In regard to FIG. 1, the "cradle-to-gate" boundaries encompass the entire facility 10 depicted in FIG. 1.

In accordance with ISO 14040:2006 and 14044:2006 standards, a life cycle inventory (LCI) of all relevant input and output process flows is collected to model the process. The inputs and outputs may be generically categorized as "Raw Materials," "Utilities," "Waste Streams," and "Emissions." An additional output includes "High Value Chemical Products" (HVCP), which may also be referred to as "Main Products," which are defined by a PlasticsEurope recommendation on steam cracker allocation to help maintain industry consistency. As noted above, High Value Chemical Products are chemical products produced by the associated process that may be sold or used in a downstream process and/or downstream product and are not removed as a waste stream for disposal and/or recycled as a fuel.

TABLE 1, below, lists the potential Input and Outputs for the LCI. The following inputs and outputs may be measured based on a steady-state over a one-year period. These inputs and outputs also do not include "Cut Off Materials," which are materials that constitute less than 0.5 percent of the total energy or mass input. Such materials may be excluded from the LCA based on their minimal impact regarding the CO₂ emissions. In addition, the following Inputs and Outputs provided in TABLE 1 do not include recycle loops as an Input (e.g., unconverted propane and ethane sent back to a cracking furnace) since these streams do not contribute to the LCA.

**TABLE 1**

| **LCI Inputs and Outputs (IPCC AR5 Categories)** | |
|---|---|
| **Raw Materials (Input)** | • Inputs to the Cracking Facility: propane; ethane; Liquefied Petroleum Gas (LPG); natural gasoline; heavy naphtha; light naphtha; n-butane; C4 raffinates; mixed butylenes; crude butadiene; flux oil; and wash oil. |
| | • Inputs to the Pyrolysis Facility: plastics (e.g., PP, PE, PET, nylon, etc.); process steam; catalysts; process gases (e.g., lift gases); salts (from plastic separation); dimethyl sulfide; t-butyl polysulfide; H₂S; and additives to passivate metals. |
| **Utilities (Input)** | • Steam; electricity; nitrogen; compressed air, cooling water; thermal energy gas sources (e.g., natural gas, methane, hydrogen, etc.); and heat transfer medium fluids for providing thermal energy. |
| **Waste Streams (Output)** | • Pyrolysis char/residue; inert heat energy carrier (e.g., sand); spent catalyst (thermal carrier); wastewater treatment flow; and incineration stream (e.g., spent filters, high-quantity quench oil strainer, hazardous materials that cannot be landfilled or recycled, etc.). |
| **Emissions (Output)** | • Carbon dioxide; nitrous oxide; methane; sulfur hexyl fluoride; and carbon monoxide. |
| **HVCP (Output)** | • Products from Cracking Facility: ethylene; propylene; saturated and unsaturated C4 hydrocarbons; hydrogen; pyrolysis gasoline; benzene; toluene; and xylene. |
| | • Products from Pyrolysis Facility: pyrolysis gas and pyrolysis oil. |

The above LCI data from TABLE 1 may be written into and processed by GaBi software version 10.5.0.78, provided by Sphera Solutions Inc (GaBi). GaBi generates a Life Cycle Impact Assessment (LCIA), which includes various midpoint impact indicators produced via various methodologies. The "IPCC AR5 GWP100, excluding biogenic carbon" midpoint indicator is selected for its representation of the standard 100-year Global Warming Potential (GWP). This midpoint indicator is used to compare the baseline process environmental performance with the claimed process improvement. Consequently, GaBi can then provide the LCA in the form of GWP. As used herein, "Global Warming Potential" or "GWP" refers to a summation of Greenhouse Gas (GHG) emissions converted to CO₂-equivalents. The units are kilograms CO₂-equivalent per functional unit (e.g., HVCP type), and the functional unit is typically expressed as 1 kilogram product (kg CO₂-eq/kg).

By utilizing the aforementioned methods and configurations, we can lower the carbon footprint and GWP of the combined facilities described herein. In an embodiment or in combination with any embodiment mentioned herein, a low GWP HVCP production process can be provided using the methods and configurations described herein. Such processes may comprise: (a) feeding a cracker feed to a cracker furnace of a cracker facility; (b) producing CO₂ and high value chemical products from the cracker facility at an initial GWP; and (c) reducing the initial GWP of the cracker facility to a reduced GWP by feeding at least a portion of a pyrolysis effluent to the cracker facility. Furthermore, in such embodiments, one or more of the following criteria may be met by the process: (i) a pyrolysis gas is fed to the cracker facility downstream of the cracker furnace; (ii) at least a portion of a demethanizer overhead stream is used as a fuel in the cracker facility and/or pyrolysis facility; and (iii) the pyrolysis effluent is produced by a waste plastic pyrolysis reaction in a pyrolysis facility that includes at least one or more of the following features: (1) a heat transfer medium that derives and transfers heat energy from the pyrolysis effluent, a pyrolysis gas, and/or a pyrolysis oil within a pyrolysis facility, (2) CO₂ is recovered from a pyrolysis flue gas and/or a pyrolysis gas, or (3) a pyrolysis facility is co-located with the cracker facility. In certain embodiments, the reduced GWP is at least 0.05, at least 0.1, at least 0.15, at least 0.20, at least 0.25, at least 0.30, at least 0.35, at least 0.40, at least 0.45, or at least 0.50 lower than the initial GWP, as measured using the GWP standard (kg of CO₂ per kg of HVCP).

In an embodiment or in combination with any embodiment mentioned herein, a low GWP HVCP production process can be provided using the methods and configurations described herein. Such processes may comprise: (a) providing a waste plastic; (b) pyrolyzing at least a portion of the waste plastic in a pyrolysis facility to thereby form a pyrolysis effluent comprising a pyrolysis oil and a pyrolysis gas; (c) feeding a cracker feed to a cracker furnace of a cracker facility, wherein the pyrolysis facility is co-located with the cracker facility; (d) producing CO₂ and high value chemical products from the cracker facility at an initial GWP; and (e) reducing the initial GWP of the cracker facility to a reduced GWP by feeding at least a portion of the pyrolysis effluent, the pyrolysis gas, and/or the pyrolysis oil to the cracker facility. In such embodiments, at least one of the following criteria is met: (i) the pyrolysis gas is fed to the cracker facility downstream of the cracker furnace, (ii) at least a portion of a demethanizer overhead stream is used as a fuel in the cracker facility and/or the pyrolysis facility, (iii) a heat transfer medium derives and transfers heat energy from at least a portion of the pyrolysis effluent, the pyrolysis gas, and/or the pyrolysis oil within the pyrolysis facility, or (iv) CO₂ is recovered from a pyrolysis flue gas and/or the pyrolysis gas. In certain embodiments, the reduced GWP is at least 0.05, at least 0.1, at least 0.15, at least 0.20, at least 0.25, at least 0.30, at least 0.35, at least 0.40, at least 0.45, or at least 0.50 lower than the initial GWP, as measured using the GWP standard (kg of CO₂ per kg of HVCP).

In an embodiment or in combination with any embodiment mentioned herein, a low GWP HVCP production process can be provided that comprises: (a) cracking a cracker feed and (b) recovering one or more HVCP at a GWP of less than 1.90, less than 1.80, less than 1.70, less than 1.60, less than 1.50, less than 1.45, less than 1.40, less than 1.35, less than 1.30, less than 1.25, less than 1.20, less than 1.15, less than 1.05, less than 1, less than 0.95, less than 0.90, less than 0.85, or less than 0.80 kg of CO₂ per kg of HVCP. Additionally, or alternatively, this process can recover one or more HVCP at a GWP at least 0.2, at least 0.3, at least 0.4, at least 0.5, at least 0.6, at least 0.7, at least 0.8, at least 0.9, or at least 1.0 kg of CO₂ per kg of HVCP. This GWP can be measured in accordance with the above LCA test methodology described above and the LCI Inputs/Outputs provided in TABLE 1 .

When measuring the GWP of a facility based on the HVCP production, it is not required for the associated facility to produce all of the possible HVCP's at the facility, only that the facility produce one or more of the applicable HVCP's. For example, if the GWP is calculated based on one or more HVCP's from the group of olefins (e.g., ethylene, propylene, butene, piperylene, cyclopentadiene, pentenes, and/or butadiene), saturated and unsaturated C4 hydrocarbons, hydrogen, pyrolysis gasoline, benzene, toluene, xylene, or a combination thereof, then the facility only needs to produce one of these HVCP's (e.g., ethylene) in order for the GWP to be adequately calculated. Thus, in this example, the GWP based on the HVCP production for a facility that only produces ethylene would only be calculated based on the ethylene production of that facility.

In an embodiment or in combination with any embodiment mentioned herein, a low GWP olefin production process can be provided that comprises: (a) cracking a cracker feed and (b) recovering one or more olefins at a GWP of less than 1.90, less than 1.80, less than 1.70, less than 1.60, less than 1.50, less than 1.45, less than 1.40, less than 1.35, less than 1.30, less than 1.25, less than 1.20, less than 1.15, less than 1.05, or less than 1 kg of CO₂ per kg of olefins. Additionally, or alternatively, this process can recover one or more olefins at a GWP at least 0.2, at least 0.3, at least 0.4, at least 0.5, at least 0.6, at least 0.7, at least 0.8, at least 0.9, or at least 1.0 kg of CO₂ per kg of olefins. This GWP can be measured in accordance with the above LCA test methodology described above and the LCI Inputs/Outputs provided in TABLE 1. In such embodiments, the olefins included in the calculation of the GWP can include ethylene, propylene, butene, piperylene, cyclopentadiene, pentenes, and/or butadiene. In certain embodiments, the olefins included in the calculation of the GWP can comprise C2 and C3 olefins, such as ethylene and/or propylene.

When measuring the GWP of a facility based on the olefin production, it is not required for the associated facility to produce all of the possible olefins at the facility, only that the facility produce one or more of the applicable olefins. For example, if the GWP is calculated based on one or more olefins from the group of ethylene, propylene, butene, piperylene, cyclopentadiene, pentenes, and/or butadiene, then the facility only needs to produce one of these olefins (e.g., ethylene) in order for the GWP to be adequately calculated. Thus, in this example, the GWP based on the olefin production for a facility that only produces ethylene would only be calculated based on the ethylene production of that facility.

As noted above, the HVCP can include one or more products derived from the pyrolysis process and/or cracking process described herein. Exemplary HVCP's can include olefins (e.g., ethylene, propylene, butene, piperylene, cyclopentadiene, pentenes, and/or butadiene); saturated and unsaturated C4 hydrocarbons; hydrogen; pyrolysis gasoline; benzene; toluene; xylene; pyrolysis gas, pyrolysis oil, or a combination thereof. Exemplary olefins for the LCA test methodology can include ethylene, propylene, butenes, piperylene, cyclopentadiene, pentenes, and/or butadiene. This GWP can be measured in accordance with the above LCA test methodology described above and the LCI Inputs/Outputs provided in TABLE 1 .

### Definitions

It should be understood that the following is not intended to be an exclusive list of defined terms. Other definitions may be provided in the foregoing description, such as, for example, when accompanying the use of a defined term in context.

As used herein, the terms "a," "an," and "the" mean one or more.

As used herein, the term "and/or," when used in a list of two or more items, means that any one of the listed items can be employed by itself or any combination of two or more of the listed items can be employed. For example, if a composition is described as containing components A, B, and/or C, the composition can contain A alone; B alone; C alone; A and B in combination; A and C in combination, B and C in combination; or A, B, and C in combination.

As used herein, the phrase "at least a portion" includes at least a portion and up to and including the entire amount or time period.

As used herein, "aqueous" refers to a fluid containing at least five percent of molecular water by weight.

As used herein, the term "caustic" refers to any basic solution (e.g., strong bases, concentrated weak bases, etc.) that can be used in the technology as a cleaning agent, for killing pathogens, and/or reducing odors.

As used herein, the term "chemical recycling" refers to a waste plastic recycling process that includes a step of chemically converting waste plastic polymers into lower molecular weight polymers, oligomers, monomers, and/or non-polymeric molecules (e.g., hydrogen, carbon monoxide, methane, ethane, propane, ethylene, and propylene) that are useful by themselves and/or are useful as feedstocks to another chemical production process(es).

As used herein, the term "chemical recycling facility" refers to a facility for producing a recycle content product via chemical recycling of waste plastic.

As used herein, the term "co-located" refers to the characteristic of at least two objects being situated on a common physical site, and/or within one mile of each other.

As used herein, the terms "comprising," "comprises," and "comprise" are open-ended transition terms used to transition from a subject recited before the term to one or more elements recited after the term, where the element or elements listed after the transition term are not necessarily the only elements that make up the subject.

As used herein, the term "cracking" refers to breaking down complex organic molecules into smaller molecules.

As used herein, the term "D90" refers to a specified diameter where ninety percent of a distribution of particles has a smaller diameter than the specified diameter and ten percent has a larger diameter than the specified diameter. To ensure that a representative D90 value is obtained, the sample size of the particles should be at least one pound. To determine a D90 for particles in a continuous process, testing should be performed on at least 5 samples that are taken at equal time intervals over at least 24 hours. Testing for D90 is performed using high-speed photography and computer algorithms to generate a particle size distribution. One suitable particle size analyzer for determining D90 values is the Model CPA 4-1 Computerized Particle Analyzer from W.S Tyler of Mentor, Ohio.

As used herein, the term "diameter" means the maximum chord length of a particle (i.e., its largest dimension).

As used herein, the term "density separation process" refers to a process for separating materials based, at least in part, upon the respective densities of the materials. Moreover, the terms "low-density separation stage" and "high-density separation stage" refer to relative density separation processes, wherein the low-density separation has a target separation density less than the target separation density of the high-density separation stage.

As used herein, the term "depleted" refers to having a concentration (on a dry weight basis) of a specific component that is less than the concentration of that component in a reference material or stream.

As used herein, the term "directly derived" refers to having at least one physical component originating from waste plastic.

As used herein, the term "enriched" refers to having a concentration (on a dry weight basis) of a specific component that is greater than the concentration of that component in a reference material or stream.

As used herein, the term "fluid" may encompass a liquid, a gas, a supercritical fluid, or a combination thereof.

As used herein, the term "halide" refers to a composition comprising a halogen atom bearing a negative charge (i.e., a halide ion).

As used herein, the term "halogen" or "halogens" refers to organic or inorganic compounds, ionic, or elemental species comprising at least one halogen atom.

As used herein, the terms "having," "has," and "have" have the same open-ended meaning as "comprising," "comprises," and "comprise" provided above.

As used herein, a "heat transfer medium loop" or "HTM loop" refers to a system comprising one or more heat exchangers through which a common HTM is circulated to a common HTM supply or a part of a larger system for the purpose of transferring heat and/or energy into and/or out of the chemical recycling process.

As used herein, the terms "including," "include," and "included" have the same open-ended meaning as "comprising," "comprises," and "comprise" provided above.

As used herein, the term "indirectly derived" refers to having an assigned recycle content i) that is attributable to waste plastic, but ii) that is not based on having a physical component originating from waste plastic.

As used herein, the term "isolated" refers to the characteristic of an object or objects being by itself or themselves and separate from other materials, in motion or static.

As used herein, the terms "mixed plastic waste" and "MPW" refer to a mixture of at least two types of waste plastics including, but not limited to the following plastic types: polyethylene terephthalate (PET), one or more polyolefins (PO), and polyvinylchloride (PVC).

As used herein, "non-aqueous" refers to a fluid containing less than five percent of molecular water by weight.

As used herein, the term "overhead" refers to the physical location of a structure that is above a maximum elevation of quantity of particulate plastic solids within an enclosed structure.

As used herein, the term "partially processed waste plastic" means waste plastic that has been subjected to at least on automated or mechanized sorting, washing, or comminuted step or process. Partially processed waste plastics may originate from, for example, municipal recycling facilities (MRFs) or reclaimers. When partially processed waste plastic is provided to the chemical recycling facility, one or more preprocessing steps may me skipped.

As used herein, the term "physical recycling" (also known as "mechanical recycling") refers to a waste plastic recycling process that includes a step of melting waste plastic and forming the molten plastic into a new intermediate product (e.g., pellets or sheets) and/or a new end product (e.g., bottles). Generally, physical recycling does not substantially change the chemical structure of the plastic, although some degradation is possible.

As used herein, the term "plastic" may include any organic synthetic polymers that are solid at 25°C and 1 atmosphere of pressure.

As used herein, the term "predominantly" means more than 50 percent by weight. For example, a predominantly propane stream, composition, feedstock, or product is a stream, composition, feedstock, or product that contains more than 50 weight percent propane.

As used herein, the term "preprocessing" refers to preparing waste plastic for chemical recycling using one or more of the following steps: (i) comminuting, (ii) particulating, (iii) washing, (iv) drying, and/or (v) separating.

As used herein, the term "pyrolysis" refers to thermal decomposition of one or more organic materials at elevated temperatures in an inert (i.e., substantially oxygen free) atmosphere.

As used herein, the term "pyrolysis char" refers to a carbon-containing composition obtained from pyrolysis that is solid at 200°C and 1 atm.

As used herein, the terms "pyrolysis gas" and "pygas" refer to a composition obtained from pyrolysis that is gaseous at 25°C at 1 atm.

As used herein, the term "pyrolysis heavy waxes" refers to C20+ hydrocarbons obtained from pyrolysis that are not pyrolysis char, pyrolysis gas, or pyrolysis oil.

As used herein, the terms "pyrolysis oil" or "pyoil" refers to a composition obtained from pyrolysis that is liquid at 25°C and 1 atm.

As used herein, the term "pyrolysis residue" refers to a composition obtained from pyrolysis that is not pyrolysis gas or pyrolysis oil and that comprises predominantly pyrolysis char and pyrolysis heavy waxes.

As used herein, the term "recycle content" and "r-content" refer to being or comprising a composition that is directly and/or indirectly derived from waste plastic.

As used herein, the term "solvolysis" or "ester solvolysis" refers to a reaction by which an ester-containing feed is chemically decomposed in the presence of a solvent, such as methanol, to form a principal carboxyl product (e.g., dimethyl terephthalate) and a principal glycol product (e.g., ethylene glycol). When the ester being subjected to solvolysis comprises PET, the solvolysis performed in the solvolysis facility may be PET solvolysis. As used herein, the term "PET solvolysis" refers to a reaction by which a polyester terephthalate-containing feed is chemically decomposed in the presence of a solvent (e.g., methanol) to form a principal terephthalyl product (e.g., dimethyl terephthalate) and a principal glycol product (e.g., ethylene glycol).

As used herein, a "solvolysis facility" is a facility that includes all equipment, lines, and controls necessary to carry out solvolysis of waste plastic and feedstocks derived therefrom.

As used herein, the terms "waste plastic" and "plastic waste" refer to used, scrap, and/or discarded plastic materials. The waste plastic fed to the chemical recycling facility may be unprocessed or partially processed.

As used herein, the term "unprocessed waste plastic" means waste plastic that has not be subjected to any automated or mechanized sorting, washing, or comminuting. Examples of unprocessed waste plastic include waste plastic collected from household curbside plastic recycling bins or shared community plastic recycling containers.

As used herein, the phrase "at least a portion" includes at least a portion and up to and including the entire amount or time period.

As used herein, "downstream" means a target unit operation, vessel, or equipment that:
a. is in fluid (liquid or gas) communication, or in piping communication, with an outlet stream from the radiant section of a cracker furnace, optionally through one or more intermediate unit operations, vessels, or equipment, or
b. was in fluid (liquid or gas) communication, or in piping communication, with an outlet stream from the radiant section of a cracker furnace, optionally through one or more intermediate unit operations, vessels, or equipment, provided that the target unit operation, vessel, or equipment remains within the battery limits of the cracker facility (which includes the furnace and all associated downstream separation equipment).

### ADDITIONAL CLAIM SUPPORTING DESCRIPTION - FIRST EMBODIMENT

In a first embodiment of the present technology there is provided a low Global Warming Potential (GWP) HVCP production process. Generally, the process comprises: (a) feeding a cracker feed to a cracker furnace of a cracker facility; (b) producing CO₂ and high value chemical products from the cracker facility at an initial GWP; and (c) reducing the initial GWP of the cracker facility to a reduced GWP by feeding at least a portion of a pyrolysis effluent to the cracker facility. Furthermore, at least one of the following criteria is met: (I) a pyrolysis gas is fed to the cracker facility downstream of the cracker furnace, (II) at least a portion of a demethanizer overhead stream is used as a fuel in the cracker facility and/or in a pyrolysis facility, or (III) the pyrolysis effluent is produced by a waste plastic pyrolysis reaction in a pyrolysis facility. Additionally, the waste plastic pyrolysis reaction includes at least one or more of the following features: (i) a heat transfer medium that derives and transfers heat energy from the pyrolysis effluent, a pyrolysis gas, and/or a pyrolysis oil to a process for making or processing a chemical or energy, (ii) CO₂ is recovered from a pyrolysis flue gas and/or a pyrolysis gas within the pyrolysis facility, or (iii) the pyrolysis facility is co-located with the cracker facility.

The first embodiment described in the preceding paragraph can also include one or more of the additional aspects/features listed in the following bullet pointed paragraphs. Each of the below additional features of the first embodiment can be standalone features or can be combined with one or more of the other additional features to the extent consistent. Additionally, the following bullet pointed paragraphs can be viewed as dependent claim features having levels of dependency indicated by the degree of indention in the bulleted list (i.e., a feature indented further than the feature(s) listed above it is considered dependent on the feature(s) listed above it).
- wherein the pyrolysis gas is fed to the cracker facility downstream of the cracker furnace.
   ∘ wherein at least a portion of the demethanizer overhead stream is used as a fuel in the cracker facility and/or the pyrolysis facility.
   ∘ wherein the pyrolysis effluent is produced by the waste plastic pyrolysis reaction.
      ▪ wherein the waste plastic pyrolysis reaction comprises the heat transfer medium that derives and transfers heat energy from the pyrolysis effluent, the pyrolysis gas, and/or the pyrolysis oil within the pyrolysis facility.
         - wherein the heat transfer medium derives and transfers heat energy from the pyrolysis effluent.
         - wherein the heat transfer medium derives and transfers heat energy from the pyrolysis gas.
         - wherein the heat transfer medium derives and transfers heat energy from the pyrolysis gas and the pyrolysis oil.
         - wherein the process for making or processing the chemical or energy comprises transferring the heat energy to a waste plastic feedstock in the pyrolysis facility.
      ▪ wherein the waste plastic pyrolysis reaction comprises recovering CO₂ from the pyrolysis flue gas and/or the pyrolysis gas.
      ▪ wherein the pyrolysis facility is co-located with the cracker facility.
         - wherein the pyrolysis facility and the cracking facility are within 40, within 35, within 30, within 20, within 15, within 12, within 10, within 8, within 5, within 2, or within 1 miles of one another, measured from their geographical centers.
- wherein at least a portion of the demethanizer overhead stream is used as a fuel in the cracker facility and/or the pyrolysis facility.
   ∘ wherein the pyrolysis gas is fed to the cracker facility downstream of the cracker furnace.
   ∘ wherein the pyrolysis effluent is produced by the waste plastic pyrolysis reaction.
      ▪ wherein the waste plastic pyrolysis reaction comprises the heat transfer medium that derives and transfers heat energy from the pyrolysis effluent, the pyrolysis gas, and/or the pyrolysis oil within the pyrolysis facility.
         - wherein the process for making or processing the chemical or energy comprises transferring the heat energy to a waste plastic feedstock in the pyrolysis facility.
         - wherein the heat transfer medium derives and transfers heat energy from the pyrolysis effluent.
         - wherein the heat transfer medium derives and transfers heat energy from the pyrolysis gas.
         - wherein the heat transfer medium derives and transfers heat energy from the pyrolysis gas and the pyrolysis oil.
      ▪ wherein the waste plastic pyrolysis reaction comprises recovering CO₂ from the pyrolysis flue gas and/or the pyrolysis gas.
      ▪ wherein the pyrolysis facility is co-located with the cracker facility.
         - wherein the pyrolysis facility and the cracking facility are within 40, within 35, within 30, within 20, within 15, within 12, within 10, within 8, within 5, within 2, or within 1 miles of one another, measured from their geographical centers.
   • wherein the pyrolysis effluent is produced by a waste plastic pyrolysis reaction.
      ∘ wherein the waste plastic pyrolysis reaction comprises the heat transfer medium that derives and transfers heat energy from the pyrolysis effluent, the pyrolysis gas, and/or the pyrolysis oil within the pyrolysis facility.
         ▪ wherein the heat transfer medium derives and transfers heat energy from the pyrolysis effluent.
         ▪ wherein the heat transfer medium derives and transfers heat energy from the pyrolysis gas.
         ▪ wherein the heat transfer medium derives and transfers heat energy from the pyrolysis gas and the pyrolysis oil.
         ▪ wherein the process for making or processing the chemical or energy comprises transferring the heat energy to a waste plastic feedstock in the pyrolysis facility.
      ∘ wherein the waste plastic pyrolysis reaction comprises recovering CO₂ from the pyrolysis flue gas and/or the pyrolysis gas.
      ∘ wherein the pyrolysis facility is co-located with the cracker facility.
         ▪ wherein the pyrolysis facility and the cracking facility are within 40, within 35, within 30, within 20, within 15, within 12, within 10, within 8, within 5, within 2, or within 1 miles of one another, measured from their geographical centers.
      ∘ wherein at least a portion of the demethanizer overhead stream is used as a fuel in the cracker facility and/or the pyrolysis facility.
      ∘ wherein the pyrolysis gas is fed to the cracker facility downstream of the cracker furnace.
   • wherein the high value chemical products comprise ethylene, propylene, butadiene, saturated and unsaturated C4 hydrocarbons, hydrogen, pyrolysis gasoline, benzene, toluene, xylene, the pyrolysis gas, the pyrolysis oil, or a combination thereof.
   • wherein the reduced GWP is at least 0.05, at least 0.1, at least 0.15, at least 0.20, at least 0.25, at least 0.30, at least 0.35, at least 0.40, at least 0.45, or at least 0.50 lower than the initial GWP, as measured using the GWP standard (kg of CO₂ per kg of HVCP).

### ADDITIONAL CLAIM SUPPORTING DESCRIPTION - SECOND EMBODIMENT

In a second embodiment of the present technology there is provided a low Global Warming Potential (GWP) olefin production process. Generally, the process comprises: (a) providing a waste plastic; (b) pyrolyzing at least a portion of the waste plastic in a pyrolysis facility to thereby form a pyrolysis effluent comprising a pyrolysis oil and a pyrolysis gas; (c) feeding a cracker feed to a cracker furnace of a cracker facility, wherein the pyrolysis facility is co-located with the cracker facility; (d) producing CO₂ and high value chemical products from the cracker facility at an initial GWP; and (e) reducing the initial GWP of the cracker facility to a reduced GWP by feeding at least a portion of the pyrolysis effluent, the pyrolysis gas, and/or the pyrolysis oil to the cracker facility. Furthermore, at least one of the following criteria is met: (i) the pyrolysis gas is fed to the cracker facility downstream of the cracker furnace, (ii) at least a portion of a demethanizer overhead stream is used as a fuel in the cracker facility and/or the pyrolysis facility, (iii) a heat transfer medium derives and transfers heat energy from at least a portion of the pyrolysis effluent, the pyrolysis gas, and/or the pyrolysis oil to a process for making or processing a chemical or energy, or (iv) CO₂ is recovered from a pyrolysis flue gas and/or the pyrolysis gas.

The second embodiment described in the preceding paragraph can also include one or more of the additional aspects/features listed in the following bullet pointed paragraphs. Each of the below additional features of the second embodiment can be standalone features or can be combined with one or more of the other additional features to the extent consistent. Additionally, the following bullet pointed paragraphs can be viewed as dependent claim features having levels of dependency indicated by the degree of indention in the bulleted list (i.e., a feature indented further than the feature(s) listed above it is considered dependent on the feature(s) listed above it).
- wherein the pyrolysis facility and the cracking facility are within 40, within 35, within 30, within 20, within 15, within 12, within 10, within 8, within 5, within 2, or within 1 miles of one another, measured from their geographical centers.
- wherein the pyrolysis gas is fed to the cracker facility downstream of the cracker furnace.
   ∘ wherein at least a portion of the demethanizer overhead stream is used as a fuel in the cracker facility and/or the pyrolysis facility.
   ∘ further comprising the heat transfer medium derives and transfers heat energy from the pyrolysis effluent, the pyrolysis gas, and/or the pyrolysis oil within the pyrolysis facility.
      ▪ wherein the heat transfer medium derives and transfers heat energy from the pyrolysis effluent.
      ▪ wherein the heat transfer medium derives and transfers heat energy from the pyrolysis gas.
      ▪ wherein the heat transfer medium derives and transfers heat energy from the pyrolysis gas and the pyrolysis oil.
      ▪ wherein the process for making or processing the chemical or energy comprises transferring the heat energy to a waste plastic feedstock in the pyrolysis facility.
   ∘ further comprising recovering CO₂ from the pyrolysis flue gas and/or the pyrolysis gas.
- wherein at least a portion of the demethanizer overhead stream is used as a fuel in the cracker facility and/or the pyrolysis facility.
   ∘ wherein the pyrolysis gas is fed to the cracker facility downstream of the cracker furnace.
   ∘ further comprising the heat transfer medium derives and transfers heat energy from the pyrolysis effluent, the pyrolysis gas, and/or the pyrolysis oil within the pyrolysis facility.
      ▪ wherein the heat transfer medium derives and transfers heat energy from the pyrolysis effluent.
      ▪ wherein the heat transfer medium derives and transfers heat energy from the pyrolysis gas.
      ▪ wherein the heat transfer medium derives and transfers heat energy from the pyrolysis gas and the pyrolysis oil.
      ▪ wherein the process for making or processing the chemical or energy comprises transferring the heat energy to a waste plastic feedstock in the pyrolysis facility.
   ∘ further comprising recovering CO₂ from the pyrolysis flue gas and/or the pyrolysis gas.
- further comprising the heat transfer medium derives and transfers heat energy from the pyrolysis effluent, the pyrolysis gas, and/or the pyrolysis oil within the pyrolysis facility.
   ∘ wherein the heat transfer medium derives and transfers heat energy from the pyrolysis effluent.
   ∘ wherein the heat transfer medium derives and transfers heat energy from the pyrolysis gas.
   ∘ wherein the heat transfer medium derives and transfers heat energy from the pyrolysis gas and the pyrolysis oil.
   ∘ wherein the process for making or processing the chemical or energy comprises transferring the heat energy to a waste plastic feedstock in the pyrolysis facility.
   ∘ further comprising recovering CO₂ from the pyrolysis flue gas and/or the pyrolysis gas.
   ∘ wherein the pyrolysis gas is fed to the cracker facility downstream of the cracker furnace.
   ∘ wherein at least a portion of the demethanizer overhead stream is used as a fuel in the cracker facility and/or the pyrolysis facility.
- wherein the high value chemical products comprise ethylene, propylene, butadiene, saturated and unsaturated C4 hydrocarbons, hydrogen, pyrolysis gasoline, benzene, toluene, xylene, the pyrolysis gas, the pyrolysis oil, or a combination thereof.
- wherein the reduced GWP is at least 0.05, at least 0.1, at least 0.15, at least 0.20, at least 0.25, at least 0.30, at least 0.35, at least 0.40, at least 0.45, or at least 0.50 lower than the initial GWP, as measured using the GWP standard (kg of CO₂ per kg of HVCP).

### ADDITIONAL CLAIM SUPPORTING DESCRIPTION - THIRD EMBODIMENT

In a third embodiment of the present technology there is provided a low Global Warming Potential (GWP) olefin production process. Generally, the process comprises: (a) cracking a cracker feed; and (b) recovering one or more olefins at a GWP of less than 1.45 kg of CO₂ per kg of olefins.

The third embodiment described in the preceding paragraph can also include one or more of the additional aspects/features listed in the following bullet pointed paragraphs. Each of the below additional features of the third embodiment can be standalone features or can be combined with one or more of the other additional features to the extent consistent. Additionally, the following bullet pointed paragraphs can be viewed as dependent claim features having levels of dependency indicated by the degree of indention in the bulleted list (i.e., a feature indented further than the feature(s) listed above it is considered dependent on the feature(s) listed above it).
- wherein said cracking occurs in a cracking facility.
   ∘ wherein the cracking facility is co-located with a pyrolysis facility.
      ▪ wherein the pyrolysis facility and the cracking facility are within 40, within 35, within 30, within 20, within 15, within 12, within 10, within 8, within 5, within 2, or within 1 miles of one another, measured from their geographical centers.
      ▪ wherein the pyrolysis facility produces a pyrolysis effluent, a pyrolysis gas, and/or a pyrolysis oil.
         - wherein the cracker feed comprises the pyrolysis effluent, the pyrolysis gas, and/or the pyrolysis oil.
            ∘ wherein the pyrolysis gas is fed to the cracker facility downstream of the cracker furnace.
         - wherein the pyrolysis effluent, the pyrolysis gas, and/or the pyrolysis oil are produced by pyrolyzing at least one waste plastic in a pyrolysis facility.
      ▪ further comprising providing a demethanizer overhead stream from the cracking facility.
         - further comprising using at least a portion of the demethanizer overhead stream as a fuel in the cracking facility and/or the pyrolysis facility.
      ▪ further comprising providing a heat transfer medium in the pyrolysis facility.
         - further comprising deriving and transferring heat energy from the pyrolysis effluent, the pyrolysis gas, and/or the pyrolysis oil via indirect heat exchange with the heat transfer medium.
      ▪ further comprising recovering CO₂ from at least a portion of the pyrolysis gas and/or a pyrolysis flue gas derived from the pyrolysis facility.
- wherein the recovering of step (b) comprises recovering the olefins from a cracking facility.
- wherein the olefins comprise ethylene, propylene, butenes, piperylene, cyclopentadiene, pentenes, and/or butadiene.
- wherein the olefins comprise C2 and C3 olefins.
- wherein the olefins comprise ethylene and/or propylene.
- wherein the GWP is less than 1.40, less than 1.35, less than 1.30, less than 1.25, less than 1.20, less than 1.15, less than 1.05, or less than 1 kg of CO₂ per kg of olefins.
   ∘ wherein the GWP is at least 0.2, at least 0.3, at least 0.4, at least 0.5, at least 0.6, at least 0.7, at least 0.8, at least 0.9, or at least 1.0 kg of CO₂ per kg of olefins.

### ADDITIONAL CLAIM SUPPORTING DESCRIPTION - FOURTH

### EMBODIMENT

In a fourth embodiment of the present technology there is provided a low Global Warming Potential (GWP) high value chemical products (HVCP) production process. Generally, the process comprises: (a) cracking a cracker feed; and (b) recovering one or more high value chemical products (HVCP) at a GWP of less than 1.45 kg of CO₂ per kg of high value chemical products. In such embodiments, the HVCP comprises one or more olefins, saturated and unsaturated C4 hydrocarbons, hydrogen, pyrolysis gasoline, benzene, toluene, xylene, pyrolysis gas, pyrolysis oil, or a combination thereof.

It should be noted that the GWP in the fourth embodiment may be calculated based on any one or a combination of the recited HVCP's, depending on which particular HPVC's are made by the facility providing the data. Thus, for example in regard to the fourth embodiment, if a facility only produces olefins and toluene, then the GWP is calculated based on the olefins and toluene. A facility does not fall outside the scope of the fourth embodiment if it does not produce all of the recited HVCP types; rather, the facility must only produce at least one of the recited HVCP types in order to fall within the scope of the fourth embodiment.

The fourth embodiment described in the preceding paragraph can also include one or more of the additional aspects/features listed in the following bullet pointed paragraphs. Each of the below additional features of the fourth embodiment can be standalone features or can be combined with one or more of the other additional features to the extent consistent. Additionally, the following bullet pointed paragraphs can be viewed as dependent claim features having levels of dependency indicated by the degree of indention in the bulleted list (i.e., a feature indented further than the feature(s) listed above it is considered dependent on the feature(s) listed above it).
- wherein said cracking occurs in a cracking facility.
   ∘ wherein the cracking facility is co-located with a pyrolysis facility.
      ▪ wherein the pyrolysis facility and the cracking facility are within 40, within 35, within 30, within 20, within 15, within 12, within 10, within 8, within 5, within 2, or within 1 miles of one another, measured from their geographical centers.
      ▪ wherein the pyrolysis facility produces a pyrolysis effluent, a pyrolysis gas, and/or a pyrolysis oil.
         - wherein the cracker feed comprises the pyrolysis effluent, the pyrolysis gas, and/or the pyrolysis oil.
            ∘ wherein the pyrolysis gas is fed to the cracker facility downstream of the cracker furnace.
         - wherein the pyrolysis effluent, the pyrolysis gas, and/or the pyrolysis oil are produced by pyrolyzing at least one waste plastic in a pyrolysis facility.
      ▪ further comprising providing a demethanizer overhead stream from the cracking facility.
         - further comprising using at least a portion of the demethanizer overhead stream as a fuel in the cracking facility and/or the pyrolysis facility.
      ▪ further comprising providing a heat transfer medium in the pyrolysis facility.
         - further comprising deriving and transferring heat energy from the pyrolysis effluent, the pyrolysis gas, and/or the pyrolysis oil via indirect heat exchange with the heat transfer medium.
      ▪ further comprising recovering CO₂ from at least a portion of the pyrolysis gas and/or a pyrolysis flue gas derived from the pyrolysis facility.
- wherein the recovering comprises recovering the olefins from a cracking facility.
- wherein the GWP is less than 1.40, less than 1.35, less than 1.30, less than 1.20, less than 1.15, less than 1.05, or less than 1 kg of CO₂ per kg of HVCP.
   o wherein the GWP is at least 0.2, at least 0.3, at least 0.4, at least 0.5, at least 0.6, at least 0.7, at least 0.8, at least 0.9, or at least 1.0 kg of CO₂ per kg of HVCP.
- wherein the high value chemical products comprise ethylene, propylene, butadiene, hydrogen, pyrolysis gasoline, benzene, toluene, xylene, or a combination thereof.
- wherein the olefins comprise ethylene, propylene, butenes, piperylene, cyclopentadiene, pentenes, and/or butadiene.
- wherein the olefins comprise C2 and C3 olefins.
- wherein the olefins comprise ethylene and/or propylene.

### CLAIMS NOT LIMITED TO DISCLOSED EMBODIMENTS

When a numerical sequence is indicated, it is to be understood that each number is modified the same as the first number or last number in the numerical sequence or in the sentence, e.g., each number is "at least," or "up to" or "not more than" as the case may be; and each number is in an "or" relationship. For example, "at least 10, 20, 30, 40, 50, 75 wt.%..." means the same as "at least 10 wt.%, or at least 20 wt.%, or at least 30 wt.%, or at least 40 wt.%, or at least 50 wt.%, or at least 75 wt.%," etc.; and "not more than 90 wt.%, 85, 70, 60..." means the same as "not more than 90 wt.%, or not more than 85 wt.%, or not more than 70 wt.%...." etc.; and "at least 1%, 2%, 3%, 4%, 5%, 6%, 7%, 8%, 9% or 10% by weight..." means the same as " at least 1 wt.%, or at least 2 wt.%, or at least 3 wt.% ..." etc.; and "at least 5, 10, 15, 20 and/or not more than 99, 95, 90 weight percent" means the same as "at least 5 wt.%, or at least 10 wt.%, or at least 15 wt.% or at least 20 wt.% and/or not more than 99 wt.%, or not more than 95 wt.%, or not more than 90 weight percent..." etc.

## Claims

1. A low Global Warming Potential (GWP) olefin production process, the process comprising:
(a) feeding a cracker feed to a cracker furnace of a cracker facility;
(b) producing CO₂ and high value chemical products (HVCP) from the cracker facility at an initial GWP; and
(c) reducing the initial GWP of the cracker facility to a reduced GWP by feeding at least a portion of a pyrolysis effluent to the cracker facility;
wherein at least a portion of a demethanizer overhead stream derived from the cracking facility is used as a fuel in the cracker facility and/or a pyrolysis facility.

2. The process according to claim 1, wherein a pyrolysis gas is fed to the cracker facility downstream of the cracker furnace.

3. The process according to claim 1, wherein the pyrolysis effluent is produced by a waste plastic pyrolysis reaction, wherein the waste plastic pyrolysis reaction comprises the heat transfer medium that derives and transfers the heat energy from the pyrolysis effluent, the pyrolysis gas, and/or the pyrolysis oil within the pyrolysis facility, wherein the process for making or processing the chemical or the energy comprises transferring the heat energy to a solid waste plastic feedstock.

4. The process according to claim 1, wherein the pyrolysis effluent is produced by the waste plastic pyrolysis reaction, wherein the waste plastic pyrolysis reaction comprises recovering CO₂ from the pyrolysis flue gas and/or the pyrolysis gas.

5. The process according to claim 1, wherein the pyrolysis facility is co-located with the cracker facility.

6. The process according to claim 5, wherein the pyrolysis facility and the cracking facility are within 16093 meters (10 miles) of one another, measured from their geographical centers.

7. The process according to claim 1, wherein the HVCP comprises ethylene, propylene, butadiene, hydrogen, pyrolysis gasoline, benzene, toluene, xylene, the pyrolysis gas, the pyrolysis oil, or a combination thereof.

8. The process according to claim 1, wherein the reduced GWP is at least 0.1 lower than the initial GWP, as measured using the GWP standard (kg of CO₂ per kg of HVCP).

## Patentansprüche

1. Verfahren zur Herstellung von Olefinen mit niedrigem Treibhauspotenzial (Global Warming Potential, GWP), wobei das Verfahren umfasst:
(a) Zuführen eines Cracker-Einsatzmaterials in einen Crackerofen einer Crackeranlage;
(b) Erzeugen von CO₂ und hochwertigen chemischen Produkten (High Value Chemical Products, HVCP) aus der Crackeranlage mit einem anfänglichen GWP;
(c) Reduzieren des anfänglichen GWP der Crackeranlage durch Zuführen von mindestens einem Teil des Pyrolyseausflusses in die Crackeranlage; wobei mindestens ein Teil des aus der Crackeranlage stammenden Entmethanisier-Kopfproduktstroms als Brennstoff in der Crackeranlage und/oder einer Pyrolyseanlage verwendet wird.

2. Verfahren nach Anspruch 1, wobei ein Pyrolysegas der Crackeranlage stromabwärts des Crackerofens zugeführt wird.

3. Verfahren nach Anspruch 1, wobei der Pyrolyseausfluss durch eine Pyrolysereaktion von Kunststoffabfällen erzeugt wird, wobei die Pyrolysereaktion der Kunststoffabfälle das Wärmeträgermedium umfasst, das die Wärmeenergie aus dem Pyrolyseausfluss, dem Pyrolysegas und/oder dem Pyrolyseöl innerhalb der Pyrolyseanlage gewinnt und überträgt, wobei das Verfahren zur Herstellung oder Verarbeitung der Chemikalie oder der Energie die Übertragung der Wärmeenergie auf einen festen Kunststoffabfall als Ausgangsmaterial umfasst.

4. Verfahren nach Anspruch 1, wobei der Pyrolyseausfluss durch die Pyrolysereaktion von Kunststoffabfällen erzeugt wird, wobei die Pyrolysereaktion von Kunststoffabfällen die Rückgewinnung von CO₂ aus dem Pyrolyseabgas und/oder dem Pyrolysegas umfasst.

5. Verfahren nach Anspruch 1, wobei die Pyrolyseanlage am selben Ort wie die Crackeranlage angeordnet ist.

6. Verfahren nach Anspruch 5, wobei die Pyrolyseanlage und die Crackeranlage, gemessen von ihren geografischen Mittelpunkten, innerhalb von 16093 Metern (10 Meilen) voneinander entfernt liegen.

7. Verfahren nach Anspruch 1, wobei das HVCP Ethylen, Propylen, Butadien, Wasserstoff, Pyrolysebenzin, Benzol, Toluol, Xylol, das Pyrolysegas, das Pyrolyseöl oder eine Kombination davon umfasst.

8. Verfahren nach Anspruch 1, wobei der reduzierte GWP mindestens um 0,1 niedriger ist als der anfängliche GWP, gemessen mit dem GWP-Standard (kg CO₂ pro kg HVCP).

## Revendications

1. Procédé de production d'oléfines à bas potentiel de réchauffement global (PRG), le procédé comprenant :
(a) l'introduction d'une charge de craquage dans un four de craquage d'une installation de craquage ;
(b) la production de CO₂ et de produits chimiques à valeur élevée à partir de l'installation de craquage à un PRG initial ; et
(c) la réduction du PRG initial de l'installation de craquage à un PRG réduit par l'introduction d'au moins une partie d'un effluent de pyrolyse dans l'installation de craquage ;
dans lequel au moins une partie d'un flux de tête de déméthaniseur dérivé de l'installation de craquage est utilisée en tant que combustible dans l'installation de craquage et/ou dans une installation de pyrolyse.

2. Procédé selon la revendication 1, dans lequel un gaz de pyrolyse est introduit dans l'installation de craquage en aval du four de craquage.

3. Procédé selon la revendication 1, dans lequel l'effluent de pyrolyse est produit par une réaction de pyrolyse de déchets plastiques, dans lequel la réaction de pyrolyse de déchets plastiques comprend un milieu caloporteur qui capte et transfère l'énergie thermique provenant de l'effluent de pyrolyse, du gaz de pyrolyse et/ou de l'huile de pyrolyse au sein de l'installation de pyrolyse, dans lequel le procédé de fabrication ou de traitement du produit chimique ou de l'énergie comprend le transfert de l'énergie thermique à une charge d'alimentation de déchets plastiques solides.

4. Procédé selon la revendication 1, dans lequel l'effluent de pyrolyse est produit par la réaction de pyrolyse de déchets plastiques, dans lequel la réaction de pyrolyse de déchets plastiques comprend la récupération de CO₂ provenant de la fumée de pyrolyse et/ou du gaz de pyrolyse.

5. Procédé selon la revendication 1, dans lequel l'installation de pyrolyse est co-implantée avec l'installation de craquage.

6. Procédé selon la revendication 5, dans lequel l'installation de pyrolyse et l'installation de craquage sont situées à moins de 16 093 mètres (10 miles) l'une de l'autre, mesure prise à partir de leurs centres géographiques.

7. Procédé selon la revendication 1, dans lequel le produit chimique à valeur élevée comprend l'éthylène, le propylène, le butadiène, l'hydrogène, l'essence de pyrolyse, le benzène, le toluène, le xylène, le gaz de pyrolyse, l'huile de pyrolyse ou une combinaison de ceux-ci.

8. Procédé selon la revendication 1, dans lequel le PRG réduit est d'au moins 0,1 inférieur au PRG initial, tel que mesuré selon la détermination standard du PRG (kg de CO₂ par kg de produit chimique à valeur élevée).
